# EUROPÄISCHE PATENTANMELDUNG

(11) **EP 1 975 187 A1**
(43) Veröffentlichungstag der Anmeldung: **01.10.2008**
(21) Anmeldenummer: 07105145.2
(22) Anmeldetag: 28.03.2007
(51) Int. Cl.: C08G 18/10, C08G 18/42, C08G 18/75, C08G 18/76, C09J 175/00, C08G 18/32

(54) **Verfahren zur Herstellung von Polyurethanzusammensetzungen mit niedrigem Isocyanat-Monomergehalt**

(71) Anmelder: Sika Technology AG, 6340 Baar (CH)
(72) Erfinder: Burckhardt, Urs, 8049, Zürich (CH)
(74) Vertreter: Sika Patent Attorneys

(57) **Zusammenfassung**

Die vorliegende Erfindung betrifft ein Verfahren zur Herstellung einer Polyurethanzusammensetzung mit niedrigem Isocyanat-Monomergehalt. Bei diesem Verfahren wird mindestens ein Isocyanatgruppen aufweisendes Polyurethanpolymer mit mindestens einer Verbindung **VB** umgesetzt, wobei die Verbindung **VB** sowohl eine einen aktiven Wasserstoff tragende Gruppe, welche eine Hydroxylgruppe oder eine Mercaptogruppe oder eine sekundäre Aminogruppe darstellt, aufweist, als auch mindestens eine blockierte Aminogruppe aufweist, welche ausgewählt ist aus der Gruppe bestehend aus Aldiminogruppen der Formel (I a) oder (Ib), Ketiminogruppen, Enaminogruppen und Oxazolidinogruppen.

Mittels dieses Verfahrens werden kostengünstig, effizient und auf elegante Art Zusammensetzungen mit stark reduziertem Gehalt an monomeren Diisocyanaten erhalten, welche sich insbesondere als Heissschmelzklebstoffe eignen.

## Beschreibung

### Technisches Gebiet

Die Erfindung betrifft das Gebiet der Isocyanatgruppen aufweisenden Polyurethanzusammensetzungen, insbesondere der Isocyanatgruppen aufweisenden Polyurethanzusammensetzungen mit niedrigem Gehalt an monomeren Diisocyanaten.

### Stand der Technik

Bei der Verwendung von Isocyanatgruppen aufweisenden Polyurethanpolymeren stellt sich die Problematik des Restgehalts an monomeren Diisocyanaten. Aufgrund der statistischen Verteilung der möglichen Reaktionsprodukte verbleibt bei der Umsetzung von Polyolen mit Diisocyanaten zu Polyurethanpolymeren, oder bei der Herstellung von Diisocyanat-Oligomeren, nämlich stets ein mehr oder weniger hoher Restgehalt an nicht umgesetzten monomeren Diisocyanaten im Reaktionsprodukt. Diese monomeren Diisocyanate, auch kurz "Isocyanat-Monomere" genannt, sind flüchtige Verbindungen und können aufgrund ihrer reizenden, allergenen und/oder toxischen Wirkung schädlich sein. In vielen Anwendungsgebieten sind sie deshalb unerwünscht. Dies gilt insbesondere für Spritzapplikationen sowie für heiss zu verarbeitende Zusammensetzungen, wie beispielsweise Heissschmelzklebstoffe.
Es sind verschiedene Wege beschrieben worden, den Anteil an monomeren Diisocyanaten in Isocyanatgruppen aufweisenden Polyurethanpolymeren zu senken. Beispielsweise können die monomeren Diisocyanate aus dem Isocyanatgruppen aufweisenden Polyurethanpolymer nachträglich, beispielsweise durch Extraktion oder Destillation, teilweise oder ganz entfernt werden, wie beispielsweise WO 01/014443 A1 offenbart, was aber aufwändig und deshalb kostspielig ist. Ein niedriges NCO/OH-Verhältnis bei der Herstellung von Isocyanatgruppen aufweisenden Polyurethanpolymeren führt direkt zu einem niedrigeren Isocyanat-Monomergehalt; so hergestellte Polymere weisen aber aufgrund von Oligomerisierungsreaktionen ("Kettenverlängerung") eine erhöhte Viskosität auf und sind damit im Allgemeinen schlechter zu verarbeiten und weniger lagerstabil. Die Verwendung eines asymmetrischen Diisocyanats mit zwei unterschiedlich reaktiven Isocyanatgruppen, wie beispielsweise beschrieben bei WO 03/006521 A1, führt ebenfalls direkt zu einem niedrigeren Gehalt an monomeren Diisocyanaten. Die so erhältlichen Isocyanatgruppen aufweisenden Polyurethanpolymere weisen aber im Allgemeinen eine verlangsamte Vernetzung auf, da für die Vernetzungsreaktion zur Hauptsache nur die weniger reaktive der beiden Isocyanatgruppen zur Verfügung steht.

### Darstellung der Erfindung

Aufgabe der vorliegenden Erfindung ist es daher, ein Verfahren zur Herstellung von Isocyanatgruppen aufweisenden Polyurethanpolymeren mit niedrigem Gehalt an monomeren Diisocyanaten zur Verfügung zu stellen, welches die Nachteile des Standes der Technik zu überwinden vermag.
Überraschenderweise wurde gefunden, dass ein Verfahren gemäss Anspruch 1 diese Aufgabe lösen kann. Dieses Verfahren ist äusserst effizient, kostengünstig und weist zudem den Vorteil auf, dass die zweifache Funktionalität der Monomere nicht verloren geht, so dass diese nutzbringend in den bei der Vernetzung der Polyurethanpolymere entstehenden hochmolekularen Kunststoff eingebaut werden.
Mittels dieses Verfahrens lassen sich Zusammensetzungen bilden, welche eine vorteilhafte Viskosität aufweisen, lagerstabil sind und über keine verlangsamte Aushärtung verfügen. Derartige Zusammensetzungen sind Gegenstand des Anspruchs 19. Sie eignen sich insbesondere für Anwendungen, in welchen ein hoher Isocyanat-Monomergehalt nachteilig ist, wie in Spritzapplikationen oder bei heiss zu verarbeitenden Zusammensetzungen, wie beispielsweise Heissschmelzklebstoffen.
Weitere Aspekte der Erfindung betreffen ein Verfahren zum Verkleben gemäss Anspruch 20, ein Verfahren zum Abdichten gemäss Anspruch 21, ein Verfahren zum Beschichten gemäss Anspruch 22 sowie die daraus resultierenden Artikel gemäss Anspruch 25.
Besonders bevorzugte Ausführungsformen der Erfindung sind Gegenstand der abhängigen Ansprüche.

### Wege zur Ausführung der Erfindung

Gegenstand der Erfindung ist ein Verfahren zur Herstellung einer Polyurethanzusammensetzung mit niedrigem Gehalt an monomeren Diisocyanaten. Bei diesem Verfahren wird
a) mindestens ein Isocyanatgruppen aufweisendes Polyurethanpolymer **PUP** mit
b) mindestens einer Verbindung **VB**
   umgesetzt,
wobei die Verbindung **VB** dadurch gekennzeichnet ist, dass sie sowohl
i) eine einen aktiven Wasserstoff tragende Gruppe, welche eine Hydroxylgruppe oder eine Mercaptogruppe oder eine sekundäre Aminogruppe darstellt, aufweist, als auch
ii) mindestens eine blockierte Aminogruppe aufweist, welche ausgewählt ist aus der Gruppe bestehend aus Aldiminogruppen der Formel (I a) oder (I b), Ketiminogruppen, Enaminogruppen und Oxazolidinogruppen, 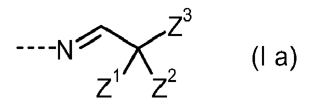 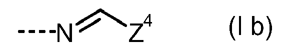 wobei in Formel (Ia)
   Z¹ und Z² entweder
      unabhängig voneinander jeweils für ein Wasserstoffatom oder für einen einwertigen Kohlenwasserstoffrest mit 1 bis 12 C-Atomen stehen,
      oder
      zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen; und
   Z³ entweder
      für ein Wasserstoffatom steht,
      oder für eine verzweigte oder unverzweigte Alkyl-, Cycloalkyl-, Alkylen-oder Cycloalkylengruppe steht,
      oder für eine substituierte oder unsubstituierte Aryl- oder Arylalkylgruppe steht,
      oder für einen Rest der Formel O-R² oder 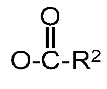 oder 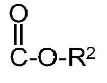 oder 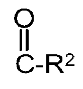 steht, wobei R²
      für eine Aryl-, Arylalkyl- oder Alkylgruppe steht und jeweils substituiert oder unsubstituiert ist,
      oder für einen Rest der Formel (II) steht, 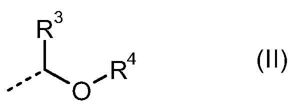 wobei in Formel (II)
      R³ für ein Wasserstoffatom oder für eine Alkyl- oder Arylalkylgruppe, bevorzugt für ein Wasserstoffatom, steht, und
      R⁴ entweder
         für einen Kohlenwasserstoffrest mit 1 bis 30 C-Atomen, der gegebenenfalls Ethersauerstoffatome enthält, steht,
         oder für einen Rest 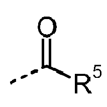 steht, wobei R⁵ für ein Wasserstoffatom oder für einen Kohlenwasserstoffrest mit 1 bis 5 C-Atomen steht;
      und wobei in Formel (I b)
   Z⁴ entweder
      für eine substituierte oder unsubstituierte Aryl- oder Heteroaryl-Gruppe, welche eine Ringgrösse von 5 bis 8, bevorzugt 6, Atomen aufweist, steht,
      oder für 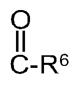 steht, wobei R⁶
      für ein Wasserstoffatom oder für eine Alkoxygruppe steht, oder für eine substituierte oder unsubstituierte Alkenyl- oder Arylalkenylgruppe mit mindestens 6 C-Atomen steht.

Es gilt hierbei die Massgabe, dass das Verhältnis zwischen den Isocyanatgruppen des Polyurethanpolymers **PUP** und der Summe der blockierten Aminogruppen und der einen aktiven Wasserstoff tragenden Gruppe der Verbindung **VB** einen Wert von ≥ 1 aufweist.

Gestrichelte Linien in den Formeln in diesem Dokument stellen jeweils die Bindung zwischen einem Substituenten und dem zugehörigen Molekülrest dar.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Der Begriff "aktiver Wasserstoff" bezeichnet im vorliegenden Dokument ein deprotonierbares, an ein Stickstoff-, Sauerstoff- oder Schwefelatom gebundenes Wasserstoffatom.
Unter einer "blockierten Aminogruppe" oder einem "latenten Amin" wird im vorliegenden Text unterschiedslos ein Derivat eines Amins mit aliphatischen primären und/oder sekundären Aminogruppen verstanden, das keine freien, sondern ausschliesslich blockierte Aminogruppen enthält und dadurch mit Isocyanaten mindestens während einer gewissen Zeit keine direkte Reaktion eingeht. Durch Kontakt mit Wasser hydrolysieren die blockierten Aminogruppen des latenten Amins ganz oder teilweise, worauf dieses mit Isocyanaten zu reagieren beginnt. Diese Reaktionen führen bei Isocyanatgruppen enthaltenden Polyurethanpolymeren zur Vernetzung.
Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist, und der Begriff "tertiäre Aminogruppe" oder "tertiärer Amin-Stickstoff" ein Stickstoffatom bezeichnet, das an drei organische Reste gebunden ist, wobei zwei dieser Reste auch gemeinsam Teil eines Rings sein können.
Als "aliphatische Aminogruppe" wird eine Aminogruppe bezeichnet, die an einen aliphatischen, cycloaliphatischen oder arylaliphatischen Rest gebunden ist. Sie unterscheidet sich damit von einer "aromatischen Aminogruppe", welche direkt an einen aromatischen oder heteroaromatischen Rest gebunden ist, wie beispielsweise in Anilin oder 2-Aminopyridin.

Beim beschriebenen Verfahren wird mindestens ein Isocyanatgruppen aufweisendes Polyurethanpolymer **PUP** eingesetzt.
Ein geeignetes Isocyanatgruppen aufweisendes Polyurethanpolymer **PUP** ist erhältlich durch die Umsetzung von mindestens einem Polyol mit mindestens einem Polyisocyanat.
Als Polyole für die Herstellung eines Polyurethanpolymers **PUP** können beispielsweise die folgenden handelsüblichen Polyole oder Mischungen davon eingesetzt werden:
- Polyetherpolyole, auch Polyoxyalkylenpolyole oder Oligoetherole genannt, welche Polymerisationsprodukte von Ethylenoxid, 1,2-Propylenoxid, 1,2-oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Als Polyetherpolyole besonders geeignet sind Polyoxyalkylendiole und -triole, insbesondere Polyoxyalkylendiole. Besonders geeignete Polyoxyalkylendi- und triole sind Polyoxyethylendi- und -triole sowie Polyoxypropylendi- und -triole.
   Besonders geeignet sind Polyoxypropylendiole und -triole mit einem Ungesättigtheitsgrad tiefer als 0.02 mEq/g und einem Molekulargewicht im Bereich von 1000 bis 30'000 g/mol, sowie Polyoxypropylendiole und -triole mit einem Molekulargewicht von 400 bis 8'000 g/mol. Unter 'Molekulargewicht' oder 'Molgewicht' versteht man im vorliegenden Dokument stets das Molekulargewichtsmittel Mₙ. Insbesondere geeignet sind Polyoxypropylendiole mit einem Ungesättigtheitsgrad tiefer als 0.02 mEq/g und einem Molekulargewicht im Bereich von 1000 bis 12'000, insbesondere zwischen 1000 und 8000 g/mol. Solche Polyetherpolyole werden beispielsweise unter dem Handelsnamen Acclaim^{®} von Bayer vertrieben.
   Ebenfalls besonders geeignet sind sogenannte "EO-endcapped" (ethylene oxide-endcapped) Polyoxypropylendiole und -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Insbesondere geeignet sind Polyesterpolyole, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
   Besonders geeignete Polyesterpolyole sind Polyesterdiole. Insbesondere geeignete Polyesterdiole sind solche hergestellt aus Adipinsäure, Azelainsäure, Sebacinsäure, Dodecandicarbonsäure, Dimerfettsäure, Phthalsäure, Isophthalsäure und Terephthalsäure als Dicarbonsäure und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol. Insbesondere geeignet sind auch Polyesterdiole hergestellt aus ε-Caprolacton und einem der vorgenannten zweiwertigen Alkohole als Starter.
   Insbesondere geeignet sind bei Raumtemperatur flüssige, amorphe, teilkristalline und kristalline Polyesterdi- und -triole, insbesondere Polyesterdiole. Geeignete bei Raumtemperatur flüssige Polyesterpolyole sind nicht weit unterhalb von Raumtemperatur fest, beispielsweise bei Temperaturen zwischen 0 °C und 25 °C, und werden vorzugsweise in Kombination mit mindestens einem amorphen, teilkristallinen oder kristallinen Polyesterpolyol eingesetzt.
- Polycarbonatpolyole, wie sie durch Umsetzung beispielsweise der oben genannten - zum Aufbau der Polyesterpolyole eingesetzten - Alkohole mit Dialkylcarbonaten, wie Dimethylcarbonat, Diarylcarbonaten, wie Diphenylcarbonat, oder Phosgen zugänglich sind.
   Besonders geeignet sind Polycarbonatdiole, insbesondere amorphe Polycarbonatdiole.
- Als Polyole ebenfalls geeignet sind mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell erhältlich unter dem Namen Hycar^{®} CTBN von Hanse Chemie) hergestellt werden können.

Diese genannten Polyole weisen bevorzugt ein mittleres Molekulargewicht von 250 - 30'000 g/mol, insbesondere von 400 - 20'000 g/mol, und weisen bevorzugt eine mittlere OH-Funktionalität im Bereich von 1.6 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, niedrigmolekulare Alkoxylierungsprodukte der vorgenannten zwei- und mehrwertigen Alkohole, sowie Mischungen der vorgenannten Alkohole bei der Herstellung eines Polyurethanpolymers **PUP** mitverwendet werden.

Als Polyisocyanate für die Herstellung eines Polyurethanpolymers **PUP** können handelsübliche aliphatische, cycloaliphatische oder aromatische Polyisocyanate, insbesondere Diisocyanate, verwendet werden, beispielsweise die folgenden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandüsocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate, sowie beliebige Mischungen der vorgenannten Isocyanate. Bevorzugt sind monomere Diisocyanate, insbesondere MDI, TDI, HDI, H₁₂MDI und IPDI.

Die Herstellung des Polyurethanpolymers **PUP** erfolgt in bekannter Art und Weise direkt aus den Polyisocyanaten und den Polyolen, oder durch schrittweise Adduktionsverfahren, wie sie auch als Kettenverlängerungsreaktionen bekannt sind.
In einer bevorzugten Ausführungsform wird das Polyurethanpolymer **PUP** über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 5, insbesondere 1.5 bis 3.
Vorteilhaft wird die Umsetzung bei einer Temperatur durchgeführt, bei der die verwendeten Polyole, Polyisocyanate und das gebildete Polyurethanpolymer flüssig vorliegen.

Das Polyurethanpolymer **PUP** weist ein Molekulargewicht von vorzugsweise über 500 g/mol, insbesondere ein solches zwischen 1000 und 50'000 g/mol, bevorzugt ein solches zwischen 2000 und 30'000 g/mol, auf.
Weiterhin weist das Polyurethanpolymer **PUP** bevorzugt eine mittlere Funktionalität im Bereich von 1.8 bis 3 auf.

In einer bevorzugten Ausführungsform ist das Polyurethanpolymer **PUP** ein bei Raumtemperatur festes Polyurethanpolymer **PUP1.** Ein bei Raumtemperatur festes Polyurethanpolymer **PUP1** ist vorteihaft erhältlich ausgehend von Polyetherpolyolen, Polyesterpolyolen und Polycarbonatpolyolen. Insbesondere geeignet sind bei Raumtemperatur flüssige, amorphe, teilkristalline und kristalline Polyester- und Polycarbonatdi- und -triole, insbesondere Polyesterdiole und Polycarbonatdiole, wobei bei Raumtemperatur flüssige Polyester- und Polycarbonatdi- und -triole nicht weit unterhalb von Raumtemperatur fest sind, beispielsweise bei Temperaturen zwischen 0 °C und 25 °C, und vorzugsweise in Kombination mit mindestens einem amorphen, teilkristallinen oder kristallinen Polyol eingesetzt werden.
Die Polyester- und Polycarbonatdi- und -triole weisen vorteilhaft ein Molekulargewicht von 500 bis 5'000 g/mol auf.
Ein bei Raumtemperatur festes Polyurethanpolymer **PUP1** kann kristallin, teilkristallin oder amorph sein. Für ein teilkristallines oder amorphes Polyurethan polymer **PUP1** gilt dabei, dass es bei Raumtemperatur nicht oder nur wenig fliessfähig ist, das heisst insbesondere, dass es bei 20 °C eine Viskosität von mehr als 5'000 Pa.s aufweist.
Das Polyurethan polymer **PUP1** weist bevorzugt ein mittleres Molekulargewicht von 1'000 bis 10'000 g/mol, insbesondere von 2'000 bis 5'000 g/mol, auf.

Beim beschriebenen Verfahren wird weiterhin mindestens eine Verbindung **VB** eingesetzt, wobei die Verbindung **VB** dadurch gekennzeichnet ist, dass sie sowohl
i) eine einen aktiven Wasserstoff tragende Gruppe, welche eine Hydroxylgruppe oder eine Mercaptogruppe oder eine sekundäre Aminogruppe darstellt, aufweist, als auch
ii) mindestens eine blockierte Aminogruppe aufweist, welche ausgewählt ist aus der Gruppe bestehend aus Aldiminogruppen der Formel (I a) oder (I b), Ketiminogruppen, Enaminogruppen und Oxazolidinogruppen.

Als Verbindung **VB** geeignet sind in einer Ausführungsform Verbindungen, welche sowohl eine einen aktiven Wasserstoff tragende Gruppe als auch mindestens eine Aldiminogruppe der Formel (I a) oder (I b) aufweisen. Solche Verbindungen **VB** sind insbesondere Aldiminogruppen aufweisende Verbindungen **VB1** der Formel (III a) oder (III b) 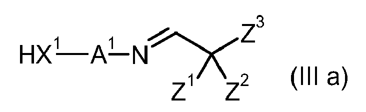 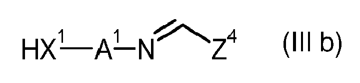 wobei
- A¹: entweder
für einen zweiwertigen, gegebenenfalls Heteroatome aufweisenden, Kohlenwasserstoffrest mit 2 bis 20 C-Atomen steht,
oder zusammen mit R⁸ für einen dreiwertigen Kohlenwasserstoffrest mit 3 bis 20 C-Atomen, welcher gegebenenfalls mindestens ein Heteroatom, insbesondere in der Form von Ether-Sauerstoff oder tertiärem Amin-Stickstoff, enthält, steht;
- X¹: für O oder S oder N-R⁷ oder N-R⁸ steht,
wobei R⁷
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (IV a) oder (IV b) steht, 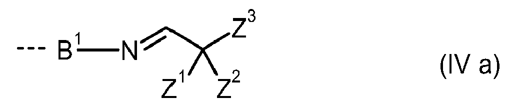 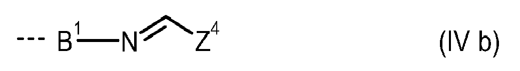 wobei B¹ für einen zweiwertigen, gegebenenfalls Heteroatome aufweisenden, Kohlenwasserstoffrest mit 2 bis 20 C-Atomen steht, und
R⁸ zusammen mit A¹ für einen dreiwertigen Kohlenwasserstoffrest mit 3 bis 20 C-Atomen, welcher gegebenenfalls mindestens ein Heteroatom, insbesondere in Form von Ether-Sauerstoff oder tertiärem Amin-Stickstoff, enthält, steht;
und
- Z¹, Z², Z³ und Z⁴: die bereits genannten Bedeutungen aufweisen.

Bevorzugt stehen X¹ für O oder N-R⁷ oder N-R⁸. Weiterhin bevorzugt stehen A¹ und/oder B¹ für jeweils einen Alkylen- oder Oxyalkylenrest mit einer Kettenlänge von 5 Atomen, insbesondere dann, wenn X¹ für O oder S steht.

Bevorzugte Verbindungen **VB1** der Formel (III a) sind Verbindungen **VB1'** der Formel (V), 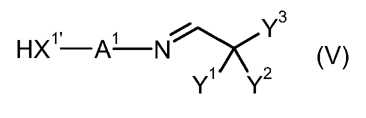 wobei
- Y¹: und Y² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
- Y³: entweder
für eine verzweigte oder unverzweigte Alkyl-, Cycloalkyl-, Alkylen- oder Cycloalkylengruppe steht,
oder Y³ für eine substituierte oder unsubstituierte Aryl- oder Arylalkylgruppe steht,
oder für einen Rest der Formel O-R² oder 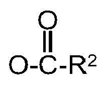 oder 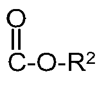 oder 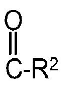 steht, wobei R² die bereits genannte Bedeutung aufweist,
oder für einen Rest der Formel (II) steht; und 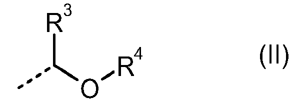
- X^{1'}: für O oder S oder N-R^{7'} oder N-R⁸ steht,
wobei R^{7'}
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (VI) steht; 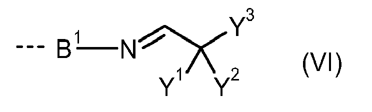 und A¹, B¹ und R⁸ die bereits erwähnten Bedeutungen aufweisen.

In den Verbindungen **VB1'** der Formel (V) stehen Y¹ und Y² bevorzugt für je eine Methylgruppe. Weiterhin steht Y³ bevorzugt für einen Rest der Formel (II), insbesondere für einen Rest der Formel (II), in welchem R³ für ein Wasserstoffatom und R⁴ für einen Rest 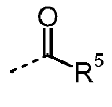 steht.

Eine Verbindung **VB1** der Formel (III a) oder (III b) ist beispielsweise erhältlich aus der Umsetzung von mindestens einem Amin **B1** der Formel (VII) mit mindestens einem Aldehyd **ALD** der Formel (VIII a) oder (VIII b),

HX^{1a}-A¹-NH₂ (VII)

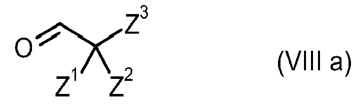

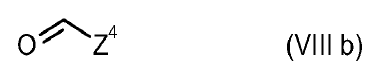

wobei
X^{1a} für O oder S oder N-R⁹ oder N-R⁸ steht,
   wobei R⁹
   entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
   oder für einen Substituenten der Formel (VII a) steht,

   --- B¹-NH₂ (VII a)

   und
A¹, Z¹, Z², Z³ und Z⁴, B¹ und R⁸ die bereits genannten Bedeutungen aufweisen.

Die Umsetzung zwischen mindestens einem Amin **B1** der Formel (VII) und mindestens einem Aldehyd **ALD** der Formel (VIII a) oder (VIII b) erfolgt in einer Kondensationsreaktion unter Abspaltung von Wasser. Solche Kondensationsreaktionen sind bestens bekannt und beschrieben, beispielsweise in Houben-Weyl, "Methoden der organischen Chemie", Vol. Xl/2, Seite 73ff. Der Aldehyd **ALD** wird hierbei in Bezug auf die primären Aminogruppen des Amins **B1** stöchiometrisch oder in stöchiometrischem Überschuss eingesetzt. Üblicherweise werden solche Kondensationsreaktionen in Anwesenheit eines Lösemittels durchgeführt, mittels welchem das bei der Reaktion entstehende Wasser azeotrop entfernt wird.

Als Aldehyd **ALD** geeignet sind zum einen Aldehyde der Formel (VIII a) wie beispielsweise Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd und Diphenylacetaldehyd.
Als Aldehyd **ALD** geeignet sind zum anderen Aldehyde der Formel (VIII b), wie beispielsweise aromatische Aldehyde, wie Benzaldehyd, 2- und 3-und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7- und 8-Stellungsisomere, sowie Anthracen-9-carbaldehyd; sowie weiterhin Glyoxal, Glyoxalsäureester wie zum Beispiel Glyoxalsäuremethylester, Zimtaldehyd und substituierte Zimtaldehyde.
Als Aldehyd **ALD** insbesondere geeignet sind Aldehyde, welche nicht enolisierbar sind, insbesondere solche, die in α-Stellung zur Carbonylgruppe kein Wasserstoffatom aufweisen.

Beispiele für insbesondere geeignete Aldehyde **ALD** sind die genannten Aldehyde der Formel (VIII b).
Insbesondere geeignete Aldehyde **ALD** sind weiterhin die sogenannten tertiären Aldehyde, das heisst Aldehyde **ALD** der Formel (VIII a), welche in α-Stellung zur Carbonylgruppe kein Wasserstoffatom aufweisen. Tertiäre Aldehyde **ALD** der Formel (VIII a) stellen Aldehyde **ALD** der Formel (IX) dar.

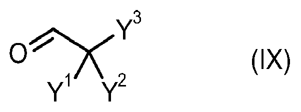

In Formel (IX) weisen Y¹, Y² und Y³ die bereits genannten Bedeutungen auf.
Geeignete Aldehyde **ALD** der Formel (IX) sind beispielsweise Pivalaldehyd (= 2,2-Dimethyl-propanal), 2,2-Dimethyl-butanal, 2,2-Diethyl-butanal, 1-Methyl-cyclopentancarboxaldehyd, 1-Methyl-cyclohexancarboxaldehyd; Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.
Weiterhin geeignete Aldehyde **ALD** der Formel (IX) sind Aldehyde **ALD** der Formel (X).

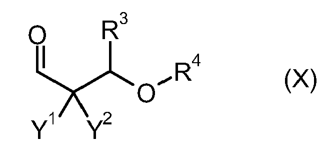

In Formel (X) weisen Y¹, Y², R³ und R⁴ die bereits genannten Bedeutungen auf.
Bevorzugt stehen in Formel (X) Y¹ und Y² für je eine Methylgruppe und R³ für ein Wasserstoffatom.

Ein geeigneter Aldehyd **ALD** der Formel (X) ist in einer Ausführungsform ein Aldehyd **ALD1** der Formel (X a), 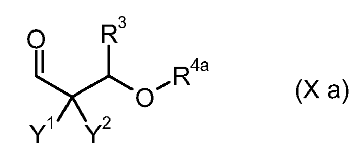 wobei R^{4a} für einen Kohlenwasserstoffrest mit 1 bis 30 C-Atomen, insbesondere 11 bis 30 C-Atomen, der gegebenenfalls Ethersauerstoffatome enthält, steht.
Die Aldehyde **ALD1** der Formel (X a) stellen Ether von aliphatischen, cycloaliphatischen oder arylaliphatischen 2,2-disubstituierten 3-Hydroxyaldehyden mit Alkoholen oder Phenolen der Formel R^{4a}-OH dar, beispielsweise Fettalkoholen oder Phenolen. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären cycloaliphatischen oder sekundären arylaliphatischen Aldehyden, wie beispielsweise Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd. Beispiele geeigneter 2,2-disubstituierter 3-Hydroxyaldehyde sind 2,2-Dimethyl-3-hydroxypropanal, 2-Hydroxymethyl-2-methylbutanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal.
Als Beispiele solcher Aldehyde **ALD1** der Formel (X a) genannt sind 2,2-Dimethyl-3-phenoxy-propanal, 3-Cyclohexyloxy-2,2-dimethyl-propanal, 2,2-Dimethyl-3-(2-ethylhexyloxy)-propanal, 2,2-Dimethyl-3-lauroxy-propanal und 2,2-Dimethyl-3-stearoxy-propanal.

Ein geeigneter Aldehyd **ALD** der Formel (X) ist in einer weiteren Ausführungsform ein Aldehyd **ALD2** der Formel (X b), 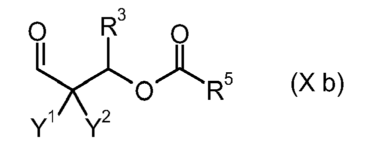 wobei R⁵ für ein Wasserstoffatom oder für einen Kohlenwasserstoffrest mit 1 bis 5 C-Atomen steht.
Die Aldehyde **ALD2** der Formel (X b) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit Carbonsäuren wie Ameisensäure, Essigsäure, Propionsäure, Buttersäure, Isobuttersäure, Valeriansäure und Capronsäure.
Als Beispiele solcher Aldehyde **ALD2** der Formel (X b) genannt sind 2,2-Dimethyl-3-formyloxy-propanal, 3-Acetoxy-2,2-dimethylpropanal, 2,2-Dimethyl-3-propionoxypropanal, 3-Butyroxy-2,2-dimethyl-propanal, 2,2-Dimethyl-3-isobutyroxy-propanal, 2,2-Dimethyl-3-pentoyloxy-propanal und 2,2-Dimethyl-3-hexoyloxy-propanal.

Bevorzugte Aldehyde **ALD** sind die Aldehyde **ALD** der Formel (VIII b) und der Formel (IX).
Insbesondere bevorzugt sind die Aldehyde **ALD** der Formel (X).
Am meisten bevorzugt sind die Aldehyde **ALD2** der Formel (X b), insbesondere 3-Acetoxy-2,2-dimethylpropanal.

Zur Herstellung einer Aldiminogruppen aufweisenden Verbindung **VB1** der Formel (III a) oder (III b) kann neben mindestens einem Aldehyd **ALD** der Formel (VIII a) oder (VIII b) weiterhin beispielsweise mindestens ein Amin **B1** der Formel (VII) eingesetzt werden.

HX^{1a}-A¹-NH₂ (VII)

Ein Amin **B1** der Formel (VII) enthält eine oder zwei aliphatische primäre Aminogruppen und mindestens eine Reaktivgruppe, welche einen aktiven Wasserstoff aufweist.
Als Amin **B1** der Formel (VII) geeignet sind in einer Ausführungsform Verbindungen mit einer oder zwei primären aliphatischen und einer sekundären Aminogruppe, wie beispielsweise N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, 3-(4-Aminobutyl)-piperidin, N-(2-Aminoethyl)piperazin, Diethylentriamin (DETA), Bis-hexamethylentriamin (BHMT), 3-(2-Aminoethyl)amino-propylamin; Di- und Triamine aus der Cyanoethylierung oder Cyanobutylierung von primären Mono- und Diaminen, beispielsweise N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentylamin, 3-Hexylamino-1-pentylamin, 3-(2-Ethylhexyl)amino-1-pentylamin, 3-Dodecylamino-1-pentylamin, 3-Cyclohexyl-amino-1-pentylamin, Dipropylentriamin (DPTA), N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin, und Fettdiamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, wie sie beispielsweise unter dem Handelsnamen Duomeen^{®} von Akzo Nobel erhältlich sind; die Produkte aus der Michael-artigen Addition von aliphatischen primären Di- oder Triaminen mit Acrylnitril, Malein- oder Fumarsäurediestern, Citraconsäurediestern, Acryl- und Methacrylsäureestern, Acryl- und Methacrylsäureamiden und Itaconsäurediestern, umgesetzt im Molverhältnis 1:1.

Als Amin **B1** der Formel (VII) geeignet sind in einer weiteren Ausführungsform aliphatische Hydroxyamine mit einer primären Aminogruppe, wie beispielsweise 2-Aminoethanol, 2-Methylaminoethanol, 1-Amino-2-propanol, 3-Amino-1-propanol, 4-Amino-1-butanol, 4-Amino-2-butanol, 2-Amino-2-methyl-propanol, 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethyl-cyclohexanol; eine primäre Aminogruppe tragende Derivate von Glykolen wie Diethylenglykol, Dipropylenglykol, Dibutylenglykol und höheren Oligomeren und Polymeren dieser Glykole, beispielsweise 2-(2-Aminoethoxy)-ethanol, Triethylenglykol-monoamin, α-(2-Hydroxymethylethyl)-ω-(2-aminomethylethoxy)-poly(oxy(methyl-1,2-ethandiyl)); eine Hydroxylgruppe und eine primäre Aminogruppen tragende Derivate von polyalkoxylierten drei- oder höherwertigen Alkoholen; Produkte aus der einfachen Cyanoethylierung und anschliessender Hydrierung von Glykolen, beispielsweise 3-(2-Hydroxyethoxy)-propylamin, 3-(2-(2-Hydroxyethoxy)-ethoxy)-propylamin und 3-(6-Hydroxyhexyloxy)-propylamin.
Als Amin **B1** der Formel (VII) geeignet sind in einer weiteren Ausführungsform aliphatische Mercaptoamine mit einer primären Aminogruppe, wie beispielsweise 2-Aminoethanthiol (Cysteamin), 3-Aminopropanthiol, 4-Amino-1-butanthiol, 6-Amino-1-hexanthiol, 8-Amino-1-octanthiol, 10-Amino-1-decanthiol, 12-Amino-1-dodecanthiol und Aminothiozucker wie 2-Amino-2-deoxy-6-thioglucose.

Als Amin **B1** der Formel (VII) bevorzugt sind Amine, welche ausgewählt sind aus der Gruppe bestehend aus N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, DETA, DPTA, BHMT und Fettdiamine wie N-Cocoalkyl-1,3-propandiamin, N-Oleyl-1,3-propandiamin, N-Soyaalkyl-1,3-propandiamin und N-Talgalkyl-1,3-propandiamin; Produkte aus der Michael-artigen Addition von aliphatischen primären Diaminen mit Malein- und Fumarsäurediestern, Acryl- und Methacrylsäureestern, Acryl- und Methacrylsäureamiden, bevorzugt mit Maleinsäurediestern, insbesondere Maleinsäuredimethyl-, -diethyl-, -dipropyl- und -dibutylester, und mit Acrylsäureestern, insbesondere Acrylsäuremethylester, umgesetzt im Molverhältnis 1:1; aliphatische Hydroxy- oder Mercaptoamine, in denen die primäre Aminogruppe von der Hydroxyl- oder Mercaptogruppe durch eine Kette von mindestens 5 Atomen, oder durch einen Ring, getrennt sind, insbesondere 5-Amino-1-pentanol, 6-Amino-1-hexanol und höhere Homologe davon, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin und höhere Oligo- und Polymere davon, 3-(2-Hydroxyethoxy)-propylamin, 3-(2-(2-Hydroxyethoxy)-ethoxy)-propylamin sowie 3-(6-Hydroxyhexyloxy)-propylamin.

Die Umsetzung zwischen einem Aldehyd **ALD** und einem Amin **B1** führt dabei zu Hydroxyaldiminen, wenn als Amin **B1** ein Hydroxyamin eingesetzt wird; zu Mercaptoaldiminen, wenn als Amin **B1** ein Mercaptoamin eingesetzt wird; oder zu Aminoaldiminen, wenn als Amin **B1** ein Amin, welches neben einer oder zwei primären Aminogruppen eine sekundäre Aminogruppe trägt, eingesetzt wird.

In einer Ausführungsform der Aldiminogruppen aufweisenden Verbindung **VB1** der Formel (III a) steht X¹ für N-R⁷. Derartige Verbindungen **VB1** der Formel (III a) oder (III b) lassen sich gegebenenfalls auf einem leicht anderern Weg als dem bisher beschriebenen herstellen. Dieser Syntheseweg besteht darin, dass ein Aldehyd **ALD** der Formel (VIII a) oder (VIII b) mit einem zweiwertigen aliphatischen primären Amin C der Formel H₂N-A'-NH₂ - wobei A' für einen zweiwertigen, gegebenenfalls Heteroatome aufweisenden, Kohlenwasserstoffrest mit 2 bis 20 C-Atomen steht - in einem ersten Schritt zu einem Zwischenprodukt umgesetzt wird, welches neben einer Aldiminogruppe noch eine primäre Aminogruppe enthält. Dieses Zwischenprodukt wird anschliessend in einem zweiten Schritt zu einer Aldiminogruppen aufweisenden Verbindung **VB1** der Formel (III a) oder (III b) umgesetzt, indem die primäre Aminogruppe einfach alkyliert wird. Für die Alkylierung werden insbesondere Verbindungen mit genau einer aktivierten Doppelbindung eingesetzt, welche mit primären Aminen Michael-artige Additionsreaktionen eingehen können; solche Verbindungen werden im Folgenden als "Michael-Akzeptor" bezeichnet.
Die Umsetzung eines Aldehyds **ALD** mit einem Amin **C** zum eine primäre Aminogruppe aufweisenden Zwischenprodukt erfolgt in einer Kondensationsreaktion unter Abspaltung von Wasser, wie sie weiter oben für die Umsetzung mindestens eines Aldehyds **ALD** mit mindestens einem Amin **B1** der Formel (VII) beschrieben wird. Die Stöchiometrie zwischen dem Aldehyd **ALD** und dem Amin **C** wird dabei so gewählt, dass 1 mol Aldehyd **ALD** für 1 mol Amin **C,** welches zwei primäre Aminogruppen enthält, eingesetzt wird. Es wird ein lösemittelfreies Herstellverfahren bevorzugt, wobei das bei der Kondensation gebildete Wasser mittels Anlegen von Vakuum aus der Reaktionsmischung entfernt wird.
Die Umsetzung des eine primäre Aminogruppe aufweisenden Zwischenprodukts mit dem Michael-Akzeptor erfolgt beispielsweise dadurch, dass das Zwischenprodukt mit einer stöchiometrischen oder leicht überstöchiometrischen Menge des Michael-Akzeptors gemischt wird und die Mischung bei Temperaturen von 20 °C bis 110°C bis zum vollständigen Umsatz des Zwischenprodukts zur Verbindung **VB1** der Formel (111 a) oder (111 b) erwärmt wird. Die Umsetzung erfolgt bevorzugt ohne die Verwendung von Lösemitteln.
Beispiele für geeignete Amine C für diese Umsetzung sind aliphatische Diamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 2-Butyl-2-ethyl-1,5-pentandiamin, 1,6-Hexamethylendiamin (HMDA), 2,2,4- und 2,4,4-Trimethylhexamethylendiamin und Mischungen davon (TMD), 1,7-Heptandiamin, 1,8-Octandiamin, 2,4-Dimethyl-1,8-octandiamin, 4-Aminomethyl-1,8-octandiamin, 1,9-Nonandiamin, 2-Methyl-1,9-nonandiamin, 5-Methyl-1,9-nonandiamin, 1,10-Decandiamin, Isodecandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin; cycloaliphatische Diamine wie 1,2-, 1,3- und 1,4-Diaminocyclohexan, Bis-(4-aminocyclohexyl)-methan (H₁₂MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo-[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan; arylaliphatische Diamine wie 1,3-Xylylendiamin (MXDA), 1,4-Xylylendiamin (PXDA); Ethergruppen-haltige aliphatische Diamine wie Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin und höhere Oligomere dieser Diamine, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman Chemicals), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} XTJ-511, Jeffamine^{®} XTJ-568 und Jeffamine^{®} XTJ-569; Polyetheramin D 230 und Polyetheramin D 400; PC Amine^{®} DA 250 und PC Amine^{®} DA 400.

Als Amin C bevorzugt sind Diamine, in denen die primären Aminogruppen durch eine Kette von mindestens 5 Atomen, oder durch einen Ring, getrennt sind, insbesondere 1,5-Diamino-2-methylpentan, 1,6-Hexamethylendiamin, 2,2,4- und 2,4,4-Trimethylhexamethylendiamin und Mischungen davon, 1,10-Decandiamin, 1,12-Dodecandiamin, 1,3- und 1,4-Diaminocyclohexan, Bis-(4-aminocyclohexyl)-methan, Bis-(4-amino-3-methylcyclohexyl)-methan, 1-Amino-3-aminomethyl-3,5,5-trimethylcyclohexan, 1,3- und 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, 1,3- und 1,4-Xylylendiamin, sowie die genannten Ethergruppen-haltigen aliphatischen Diamine und Polyoxyalkylen-Diamine.

Beispiele für geeignete Michael-Akzeptoren für diese Umsetzung sind Malein- oder Fumarsäurediester wie Dimethylmaleinat, Diethylmaleinat, Dibutylmaleinat, Diethylfumarat; Citraconsäurediester wie Dimethylcitraconat; Acryl- oder Methacrylsäureester wie Methyl(meth)acrylat, Ethyl(meth)acrylat, Butyl(meth)acrylat, Lauryl(meth)acrylat, Stearyl(meth)acrylat, Tetrahydrofuryl-(meth)acrylat, Isobornyl(meth)acrylat; Itaconsäurediester wie Dimethylitaconat; Zimtsäureester wie Methylcinnamat; Vinylphosphonsäurediester wie Vinylphosphonsäuredimethylester; Vinylsulfonsäureester, insbesondere Vinylsulfonsäurearylester; Vinylsulfone; Vinylnitrile wie Acrylnitril, 2-Pentennitril oder Fumaronitril; 1-Nitroethylene wie β-Nitrostyrol; und Knoevenagel-Kondensationsprodukte, wie beispielsweise solche aus Malonsäurediestern und Aldehyden wie Formaldehyd, Acetaldehyd oder Benzaldehyd. Bevorzugt sind Maleinsäurediester, Acrylsäureester, Phosphonsäurediester und Vinylnitrile.

Als Verbindung **VB** geeignet sind in einer weiteren Ausführungsform Verbindungen, welche sowohl eine einen aktiven Wasserstoff tragende Gruppe als auch mindestens eine Ketiminogruppe aufweisen. Solche Verbindungen **VB** sind insbesondere Ketiminogruppen aufweisende Verbindungen **VB2** der Formel (XI), 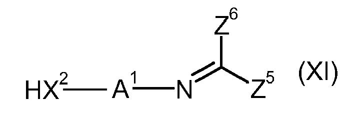 wobei
- X²: für O oder S oder N-R¹⁰ oder N-R⁸ steht,
wobei R¹⁰
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (XII) steht; 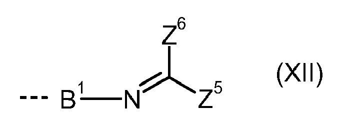
- Z⁵ und Z⁶: entweder
unabhängig voneinander jeweils für einen einwertigen Kohlenwasserstoffrest mit 1 bis 12 C-Atomen stehen, oder
zusammen für einen zweiwertigen Kohlenwasserstoffrest mit 4 bis 20 C-Atomen stehen, der Teil eines, gegebenenfalls substituierten, carbocyclischen Rings mit 5 bis 8, bevorzugt 6, C-Atomen ist; und
- A¹, B¹ und R⁸: die bereits erwähnten Bedeutungen aufweisen.

In den Verbindungen **VB2** der Formel (XI) stehen Z⁵ und Z⁶ bevorzugt entweder unabhängig voneinander jeweils für einen unverzweigten oder insbesondere verzweigten Alkylrest mit 1 bis 6 C-Atomen, oder zusammen für einen Alkylrest mit 4 bis 10 C-Atomen, der Teil eines, gegebenenfalls substituierten, carbocyclischen Rings mit 5 bis 6, insbesondere 6, C-Atomen ist, und/oder X² steht bevorzugt für O oder N-R¹⁰ oder N-R⁸.

Eine Ketiminogruppen aufweisende Verbindung **VB2** der Formel (XI) ist beispielsweise erhältlich aus der Umsetzung von mindestens einem Amin **B1** der Formel (VII) mit mindestens einem Keton der Formel (XIII) unter Abspaltung von Wasser, wobei die Ketogruppen im Verhältnis zu den primären Aminogruppen stöchiometrisch oder im stöchiometrischen Überschuss eingesetzt werden.

HX^{1a}-A¹-NH₂ (VII)

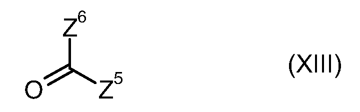

In Formel (XIII) weisen Z⁵ und Z⁶ die bereits erwähnten Bedeutungen auf.

Für diese Umsetzung sind dieselben Amine **B1** der Formel (VII) geeignet, wie sie bereits vorgängig für die Herstellung von Aldiminogruppen aufweisenden Verbindungen **VB1** der Formel (III a) oder (III b) erwähnt wurden.
Für diese Umsetzung geeignete Ketone der Formel (XIII) sind beispielsweise Aceton, Methylethylketon, Methylpropylketon, Methylisopropylketon, Methylisobutylketon, Methylpentylketon, Methylisopentylketon, Diethylketon, Dipropylketon, Düsopropylketon, Dibutylketon, Diisobutylketon, Cyclopentanon, Cyclohexanon und Actetophenon.

In einer Ausführungsform der Ketiminogruppen aufweisenden Verbindung **VB2** der Formel (XI) steht X² für N-R¹⁰. Derartige Verbindungen **VB2** der Formel (XI) lassen sich gegebenenfalls auf einem leicht anderern Weg als dem bisher beschriebenen herstellen, indem mindestens ein Keton der Formel (XIII) mit mindestens einem zweiwertigen aliphatischen primären Amin C der Formel H₂N-A'-NH₂ - wobei A' für einen zweiwertigen, gegebenenfalls Heteroatome aufweisenden, Kohlenwasserstoffrest mit 2 bis 20 C-Atomen steht - in einem ersten Schritt zu einem Zwischenprodukt umgesetzt wird, welches neben einer Ketiminogruppe noch eine primäre Aminogruppe enthält. Dieses Zwischenprodukt wird anschliessend in einem zweiten Schritt in einer Additionsreaktion mit einem eine Doppelbindung aufweisenden Michael-Akzeptor umgesetzt, wobei die Doppelbindungen in Bezug auf die primären Aminogruppen des Zwischenproduktes stöchiometrisch eingesetzt sind. Dabei entsteht mindestens ein Aminoketimin, welches neben einer Ketiminogruppe noch eine sekundäre Aminogruppe enthält, also eine Verbindung **VB2** der Formel (XI).
Die Umsetzung eines Ketons der Formel (XIII) mit einem Amin **C** zum eine primäre Aminogruppe aufweisenden Zwischenprodukt erfolgt in derselben Weise, wie bereits für die Umsetzung eines Aldehyds **ALD** mit einem Amin **C** beschrieben, ebenso wie die Umsetzung des Zwischenprodukts mit dem Michael-Akzeptor.

Als Verbindung **VB** geeignet sind in einer weiteren Ausführungsform Verbindungen, welche sowohl eine einen aktiven Wasserstoff tragende Gruppe als auch mindestens eine Enamionogruppe aufweisen. Solche Verbindungen **VB** sind insbesondere Enaminogruppen aufweisende Verbindungen **VB3** der Formel (XIV), 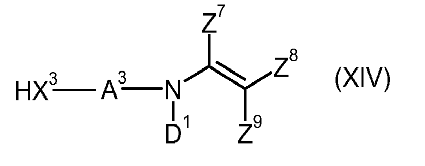 wobei
- A³: entweder
für einen zweiwertigen, gegebenenfalls Heteroatome aufweisenden, Kohlenwasserstoffrest mit 2 bis 20 C-Atomen steht,
oder
zusammen mit D¹ oder zusammen mit R¹² für einen dreiwertigen Kohlenwasserstoffrest mit 3 bis 20 C-Atomen, welcher gegebenenfalls mindestens ein Heteroatom, insbesondere in der Form von Ether-Sauerstoff oder tertiärem Amin-Stickstoff, enthält, steht,
- X³: für O oder S oder N-R¹¹ oder N-R¹² steht,
wobei R¹¹
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (XV) steht, 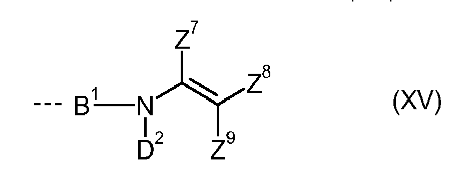 wobei D² für einen einwertigen Kohlenwasserstoffrest mit 1 bis 12 C-Atomen steht,
und R¹² entweder zusammen mit A³ oder zusammen mit D¹ für einen dreiwertigen Kohlenwasserstoffrest mit 3 bis 20 C-Atomen, welcher gegebenenfalls mindestens ein Heteroatom, insbesondere in der Form von Ether-Sauerstoff oder tertiärem Amin-Stickstoff, enthält, steht;
- Z⁷: und Z⁸ entweder
unabhängig voneinander jeweils für ein Wasserstoffatom oder für einen einwertigen Kohlenwasserstoffrest mit 1 bis 12 C-Atomen stehen, oder zusammen für einen zweiwertigen Kohlenwasserstoffrest mit 3 bis 20 C-Atomen, der Teil eines, gegebenenfalls substituierten, carbocyclischen Rings mit 5 bis 8, bevorzugt 6, C-Atomen ist, stehen;
- Z⁹: für ein Wasserstoffatom oder für einen einwertigen Kohlenwasserstoffrest mit 1 bis 12 C-Atomen steht; und
- D¹: entweder für einen einwertigen Kohlenwasserstoffrest mit 1 bis 12 C-Atomen steht,
oder
zusammen mit R¹², oder zusammen mit A³, für einen dreiwertigen Kohlenwasserstoffrest mit 4 bis 20 C-Atomen, welcher gegebenenfalls mindestens ein Heteroatom, insbesondere in der Form von Ether-Sauerstoff oder tertiärem Amin-Stickstoff, enthält, steht; und
- B¹: die bereits genannte Bedeutung aufweist.

Bevorzugt stehen Z⁷, Z⁸ und Z⁹ unabhängig voneinander jeweils entweder für ein Wasserstoffatom oder für einen Alkylrest mit 1 bis 4 C-Atomen.
Weiterhin bevorzugt stehen Z⁷ und Z⁸ zusammen für einen zweiwertigen Kohlenwasserstoffrest mit 3 bis 10 C-Atomen, der Teil eines, gegebenenfalls substituierten, carbocyclischen Rings mit 5 bis 8, bevorzugt 6, C-Atomen ist.
Weiterhin bevorzugt stehen D¹ und D² unabhängig voneinander jeweils für einen einwertigen Kohlenwasserstoffrest mit 1 bis 6 C-Atomen.
Weiterhin bevorzugt steht D¹ zusammen mit R¹² für einen, gegebenenfalls substituierten, Ethylenrest.
Weiterhin bevorzugt steht D¹ zusammen mit A³ für einen dreiwertigen Kohlenwasserstoffrest mit 4 bis 10 C-Atomen, welcher gegebenenfalls mindestens ein Heteroatom, insbesondere in der Form von Ether-Sauerstoff oder tertiärem Amin-Stickstoff, enthält.

Eine Enaminogruppen aufweisende Verbindung **VB3** der Formel (XIV) ist beispielsweise erhältlich aus der Umsetzung von mindestens einem Amin **B3** der Formel (XVI) mit mindestens einem aliphatischen oder cycloaliphatischen Aldehyd oder Keton der Formel (XVII), welches in α-Stellung zur Carbonylgruppe mindestens eine C-H-Gruppierung aufweist, unter Abspaltung von Wasser.

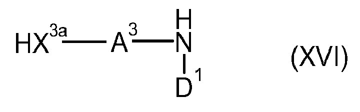

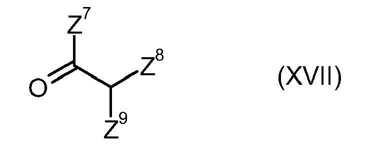

Hierbei steht
- X^{3a}: für O oder N-R¹³ oder N-R¹²,
wobei R¹³
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (XVIII) steht, 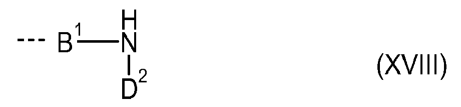 und A³, D¹, Z⁷, Z⁸ und Z⁹, R¹², B¹ und D² weisen die bereits genannten Bedeutungen auf.

Als Amin **B3** der Formel (XVI) geeignet sind in einer Ausführungsform Polyamine mit zwei sekundären Aminogruppen, wie beispielsweise Piperazin, 4,4'-Dipiperidylpropan, N,N'-Dimethyl-hexamethylendiamin und Homologe mit höheren Alkyl- oder Cycloalkylgruppen anstelle der Methylgruppen, sowie Polyamine mit drei sekundären Aminogruppen, wie beispielsweise N,N'-Dimethyl-diethylentriamin, wobei solche Amine **B3** so mit einem Aldimin oder Ketimin der Formel (XVII) umgesetzt werden, dass eine der sekundären Aminogruppen nicht umgesetzt wird, so dass ein aktiver Wasserstoff als Gruppe HX³ erhalten bleibt.
Als Amin **B3** der Formel (XVI) geeignet sind in einer weiteren Ausführungsform eine Hydroxylgruppe und eine sekundäre Aminogruppe aufweisende Amine, wie beispielsweise N-(2-Hydroxyethyl)-piperazin, 4-Hydroxy-piperidin sowie monoalkoxylierte primäre Monoamine, das heisst Umsetzungsprodukte von primären Monoaminen wie beispielsweise Methylamin, Ethylamin, Propylamin, Propylamin, Butylamin, Hexylamin, 2-Ethylhexylamin, Benzylamin und Fettamine wie Laurylamin oder Stearylamin, mit Epoxiden wie Ethylenoxid, Propylenoxid oder Butylenoxid im stöchiometrischen Verhältnis 1:1, beispielsweise N-Methyl-ethanolamin, N-Ethyl-ethanolamin, N-Butyl-ethanolamin und N-Butyl-isopropanolamin.
Als Amin **B3** der Formel (XVI) geeignet sind in einer weiteren Ausführungsform eine Mercaptogruppe und eine sekundäre Aminogruppe aufweisende Amine, wie beispielsweise N-(2-Mercaptoethyl)-piperazin, 4-Mercapto-piperidin und 2-Mercaptoethyl-butylamin.

Als Aldehyd oder Keton der Formel (XVII) geeignet sind Aldehyde wie beispielsweise Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd und Diphenylacetaldehyd; sowie Ketone, insbesondere cyclische Ketone, wie beispielsweise Cyclopentanon und Cyclohexanon.

Als Verbindung **VB** geeignet sind in einer weiteren Ausführungsform Verbindungen, welche sowohl eine einen aktiven Wasserstoff tragende Gruppe als auch mindestens eine Oxazolidinogruppe aufweisen. Solche Verbindungen **VB** sind insbesondere Oxazolidinogruppen aufweisende Verbindungen **VB4** der Formel (XIX), 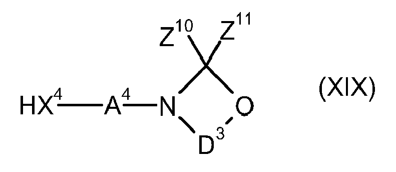 wobei
A⁴ für einen zweiwertigen, gegebenenfalls Heteroatome aufweisenden, Kohlenwasserstoffrest mit 2 bis 20 C-Atomen steht;
Z¹⁰ und Z¹¹ unabhängig voneinander jeweils für ein Wasserstoffatom oder für einen einwertigen Kohlenwasserstoffrest mit 1 bis 12 C-Atomen stehen,
D³ für einen, gegebenenfalls substituierten, Alkylenrest mit 2 oder 3 C-Atomen steht, und
X⁴ für O oder S oder N-R¹⁴ steht,
   wobei R¹⁴
   entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
   oder für einen Substituenten der Formel (XX) steht, 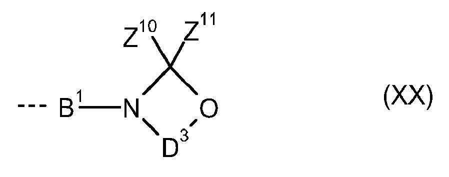 und B¹ die bereits genannte Bedeutung aufweist.

Bevorzugt stehen Z¹⁰ für ein Wasserstoffatom und Z¹¹ für einen Alkylrest mit 1 bis 8 C-Atomen.
Weiterhin bevorzugt steht A⁴ für einen gegebenenfalls substituierten Alkylenrest mit 2 oder 3 C-Atomen.
Weiterhin bevorzugt steht X⁴ für O.

Als "Oxazolidinogruppe" werden im vorliegenden Dokument sowohl Tetrahydrooxazol-Gruppen (5-Ring) als auch Tetrahydrooxazin-Gruppen (6-Ring) bezeichnet.
Eine Oxazolidinogruppen aufweisende Verbindung **VB4** der Formel (XIX) ist beispielsweise erhältlich aus der Umsetzung von mindestens einem Amin **B4** der Formel (XXI) mit mindestens einem Aldehyd oder Keton der Formel (XXII) unter Abspaltung von Wasser.

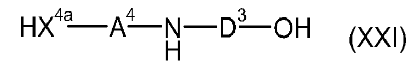

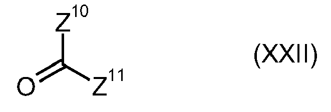

Hierbei steht
- X^{4a}: für O oder S oder N-R¹⁵,
wobei R¹⁵
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (XXIII) steht, 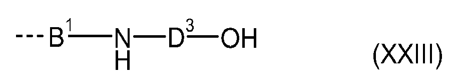 und A⁴, D³, Z¹⁰, Z¹¹ und B¹ weisen die bereits genannten Bedeutungen auf.

Als Amin **B4** der Formel (XXI) geeignet sind sekundäre Hydroxylamine wie beispielsweise Diethanolamin, Dipropanolamin und Diisopropanolamin.
Als Amin **B4** bevorzugt ist Diethanolamin, welches mit einem Keton oder Aldehyd der Formel (XXII) unter Wassersabspaltung zu einer Oxazolidinogruppen aufweisenden Verbindung **VB4'** der Formel (XIX a) umgesetzt werden kann.

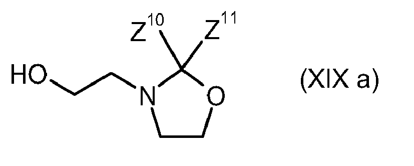

Als Aldehyde oder Ketone der Formel (XXII) geeignet sind Ketone, wie beispielsweise Aceton, Methylethylketon, Methylpropylketon, Methylisopropylketon, Methylisobutylketon, Methylpentylketon, Methylisopentylketon, Diethylketon, Dipropylketon, Diisopropylketon, Dibutylketon, Diisobutylketon, Cyclopentanon, Cyclohexanon. Insbesondere geeignet sind Aldehyde, wie beispielsweise Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd, Diphenylacetaldehyd, Benzaldehyd und substituierte Benzaldehyde. Bevorzugt ist 2-Methylpropanal.

Als Verbindung **VB** geeignet sind in einer weiteren Ausführungsform Verbindungen mit gemischten blockierten Aminogruppen. Dabei handelt es sich um Verbindungen, welche sowohl eine einen aktiven Wasserstoff tragende Gruppe als auch zwei verschiedene blockierte Aminogruppen tragen, welche ausgewählt sind aus der Gruppe bestehend aus Ketiminogruppen, Enaminogruppen, Oxazolidinogruppen und Aldiminogruppen der Formel (I a) oder (I b). Solche Verbindungen **VB** mit gemischten blockierten Aminogruppen enthalten üblicherweise eine sekundäre Aminogruppe, welche neben dem aktiven Wasserstoff zwei Reste mit jeweils einer unterschiedlichen blockierten Aminogruppe trägt.
Verbindungen **VB** mit gemischten blockierten Aminogruppen sind beispielsweise die folgenden:

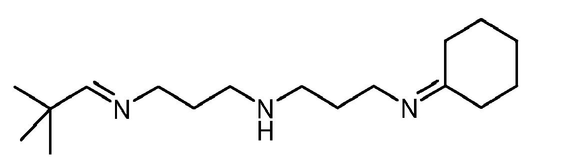

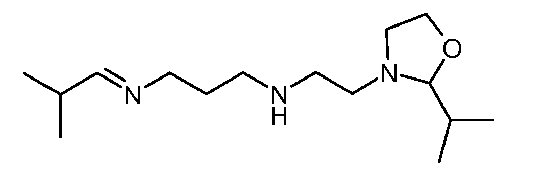

Die Verbindungen **VB** haben die Eigenschaft, dass sie unter Ausschluss von Feuchtigkeit gegenüber Isocyanatgruppen monofunktionell sind, das heisst, dass sie nur eine Reaktivgruppe tragen, welche direkt mit Isocyanatgruppen reagieren kann. Diese den aktiven Wasserstoff tragende Reaktivgruppe reagiert mit einer Isocyanatgruppe zu einer Urethangruppe, Thiourethangruppe oder Harnstoffgruppe. Die blockierten Aminogruppen in Form von Aldiminogruppen, Ketiminogruppen, Enaminogruppen und/oder Oxazolidinogruppen der Verbindungen **VB** reagieren unter Ausschluss von Feuchtigkeit mit Isocyanatgruppen nicht oder nur äusserst langsam.

Die Verbindungen **VB1** der Formel (III a) oder (III b) weisen eine oder zwei Aldiminogruppen der Formel (I a) oder (I b) auf. Bei Zutritt von Feuchtigkeit, beziehungsweise Wasser, können diese Aldiminogruppen über Zwischenstufen formal zu Aminogruppen hydrolysieren, wobei ein Aldehyd **ALD** der Formel (VII a) oder (VII b) freigesetzt wird. Da diese Hydrolysereaktion reversibel ist und das chemische Gleichgewicht deutlich auf der Aldiminseite liegt, ist davon auszugehen, dass in Abwesenheit von gegenüber Aminen reaktiven Gruppen nur ein Teil der Aldiminogruppen hydrolysiert. In Gegenwart von Isocyanatgruppen verschiebt sich das Hydrolysegleichgewicht, da die hydrolysierenden Aldiminogruppen mit den Isocyanatgruppen irreversibel zu Harnstoffgruppen reagieren. Die Reaktion der Isocyanatgruppen mit den hydrolysierenden Aldiminogruppen muss dabei nicht notwendigerweise über freie Aminogruppen erfolgen. Selbstverständlich sind auch Reaktionen mit Zwischenstufen der Hydrolysereaktion möglich. Beispielsweise ist es denkbar, dass eine hydrolysierende Aldiminogruppe in der Form eines Halbaminals direkt mit einer Isocyanatgruppe reagiert. Unter Ausschluss von Feuchtigkeit sind Aldiminogruppen zusammen mit Isocyanatgruppen sehr gut lagerstabil.
Die Verbindungen **VB1** der Formel (III b) und der Formel (V), welche ausgehend von nicht enolisierbaren Aldehyden **ALD** hergestellt sind, haben weiterhin die Eigenschaft, dass ihre Aldiminogruppen nicht zu Enaminogruppen tautomerisieren können. Aufgrund dieser Eigenschaft sind ihre Aldiminogruppen auch zusammen mit den sehr reaktiven aromatischen Isocyanatgruppen sehr gut lagerstabil.

Die Verbindungen **VB2** der Formel (XI) weisen eine oder zwei Ketiminogruppen auf. Bei Zutritt von Feuchtigkeit hydrolysieren diese Ketiminogruppen zu Aminogruppen, wobei ein Keton der Formel (XIII) freigesetzt wird. In Gegenwart von Isocyanatgruppen reagieren die hydrolysierenden Ketiminogruppen mit den Isocyanatgruppen zu Harnstoffgruppen. Unter Ausschluss von Feuchtigkeit sind Ketiminogruppen zusammen mit Isocyanatgruppen, insbesondere aliphatischen Isocyanatgruppen, für eine gewisse Zeit lagerstabil.
Die Verbindungen **VB3** der Formel (XIV) weisen eine oder zwei Enaminogruppen auf. Bei Zutritt von Feuchtigkeit hydrolysieren diese Enaminogruppen zu sekundären Aminogruppen, wobei ein Aldehyd oder ein Keton der Formel (XVII) freigesetzt wird. In Gegenwart von Isocyanatgruppen reagieren die hydrolysierenden Enaminogruppen mit den Isocyanatgruppen zu Harnstoffgruppen. Unter Ausschluss von Feuchtigkeit sind Enaminogruppen zusammen mit Isocyanatgruppen, insbesondere aliphatischen Isocyanatgruppen, für eine gewisse Zeit lagerstabil.
Die Verbindungen **VB4** der Formel (XIX) weisen eine oder zwei Oxazolidinogruppen auf. Bei Zutritt von Feuchtigkeit hydrolysieren diese Oxazolidinogruppen, wobei pro hydrolysierende Oxazolidinogruppe sowohl eine sekundäre Aminogruppe als auch eine Hydroxylgruppe freigesetzt wird, und wobei ein Aldehyd oder ein Keton der Formel (XXII) freigesetzt wird. In Gegenwart von Isocyanatgruppen reagieren die sekundären Aminogruppen zu Harnstoffgruppen und die Hydroxylgruppen zu Urethangruppen. Blockierte Aminogruppen in Form von Oxazolidinogruppen sind bei ihrer Hydrolyse gegenüber Isocyanatgruppen also difunktionell, im Gegensatz zu blockierten Aminogruppen in der Form von Aldimino-, Ketimino- und Enaminogruppen. Unter Ausschluss von Feuchtigkeit sind Oxazolidinogruppen zusammen mit Isocyanatgruppen, insbesondere aliphatischen Isocyanatgruppen, sehr gut lagerstabil.

Im vorliegenden Verfahren zur Herstellung einer Polyurethanzusammensetzung mit niedrigem Isocyanat-Monomergehalt wird mindestens ein Isocyanatgruppen aufweisendes Polyurethanpolymer **PUP** mit mindestens einer Verbindung **VB** umgesetzt.
Bei dieser Umsetzung weist das Verhältnis zwischen den Isocyanatgruppen des Polyurethanpolymers **PUP** und der Summe der blockierten Aminogruppen und der einen aktiven Wasserstoff tragenden Gruppe der Verbindung **VB** einen Wert von ≥ 1 auf. Sind als blockierte Aminogruppen Oxazolidinogruppen vorhanden, so werden diese vorteilhaft doppelt gezählt, da sie sich nach der Hydrolyse gegenüber Isocyanaten difunktionell verhalten. Vorteilhaft beträgt in diesem Fall also das Verhältnis zwischen den Isocyanatgruppen des Polyurethanpolymers **PUP** und der Summe aus der doppelten Anzahl Oxazolidinogruppen und der Anzahl allfällig vorhandener anderer blockierter Aminogruppen und der Anzahl einen aktiven Wasserstoff tragenden Gruppe der Verbindung **VB** einen Wert von ≥ 1 auf.
Bei dieser Umsetzung reagiert jeweils die den aktiven Wasserstoff tragende Reaktivgruppe der Verbindung **VB** mit einer Isocyanatgruppe, wobei als Umsetzungsprodukt mindestens ein blockierte Aminogruppen und Isocyanatgruppen aufweisendes Polyurethanpolymer gebildet wird. Die Umsetzung wird unter Feuchtigkeitsausschluss durchgeführt, so dass die blockierten Aminogruppen vorerst nicht mit weiteren vorhandenen Isocyanatgruppen reagieren. Die Umsetzung wird geeigneterweise bei einer Temperatur durchgeführt, bei der das Polyurethanpolymer **PUP** flüssig vorliegt. Gegebenenfalls kann ein Katalysator, welcher die Reaktion der den aktiven Wasserstoff tragenden Reaktivgruppe mit Isocyanatgruppen beschleunigt, vorhanden sein. Dies ist insbesondere für die Umsetzung von Hydroxyl- oder Mercaptogruppen mit Isocyanatgruppen bevorzugt.

Als Reaktionsprodukte bei dieser Umsetzung werden hauptsächlich Verbindungen gebildet, wie sie in Formel (XXIV) beispielhaft dargestellt sind. 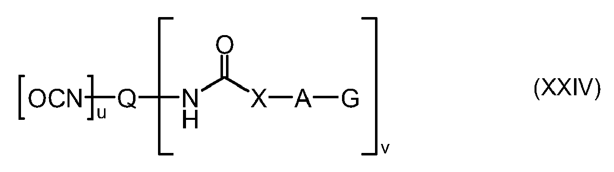 In Formel (XXIV) stehen
u für 1 oder 2 oder 3 oder 4 oder 5,
v für 1 oder 2 oder 3 oder 4 oder 5,
mit der Massgabe, dass (u+v) für 2 oder 3 oder 4 oder 5 oder 6 steht;
Q steht für den Rest eines (u+v) Isocyanatgruppen aufweisenden Polyurethanpolymers **PUP** nach Entfernung aller Isocyanatgruppen;
X steht für X¹ oder X² oder X³ oder X⁴;
A steht für A¹ oder A³ oder A⁴; und
G steht für eine blockierte Aminogruppe ausgewählt aus der Gruppe bestehend aus Aldiminogruppen der Formel (I a) oder (I b), Ketiminogruppen, Enaminogruppen und Oxazolidinogruppen.

Als Verbindung **VB** für das beschriebene Verfahren bevorzugt sind die beschriebenen Verbindungen **VB1** der Formel (III a) oder (III b), die beschriebenen Verbindungen **VB2** der Formel (XI), die beschriebenen Verbindungen **VB3** der Formel (XIV) und die beschriebenen Verbindungen **VB4** der Formel (XIX).
Als Verbindung **VB** für das beschriebene Verfahren besonders bevorzugt sind die beschriebenen Verbindungen **VB1** der Formel (III a) oder (III b), die beschriebenen Verbindungen **VB2** der Formel (XI) und die beschriebenen Verbindungen **VB4** der Formel (XIX).
Als Verbindung **VB** für das beschriebene Verfahren insbesondere bevorzugt sind die beschriebenen Verbindungen **VB1'** der Formel (V), welche ausgehend von tertiären aliphatischen oder cycloaliphatischen Aldehyden hergestellt sind, sowie die beschriebenen Verbindungen **VB4** der Formel (XIX).

Als Verbindung **VB** für das beschriebene Verfahren am meisten bevorzugt sind Verbindungen **VB1"** der Formel (XXV), 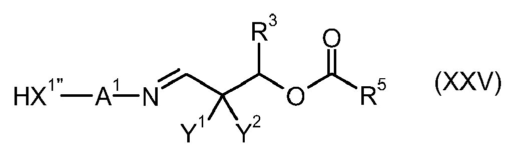 wobei
X^{1"} für O oder S oder N-R^{7"} oder N-R⁸ steht,
   wobei R^{7"}
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
   oder für einen Substituenten der Formel (XXVI) steht, 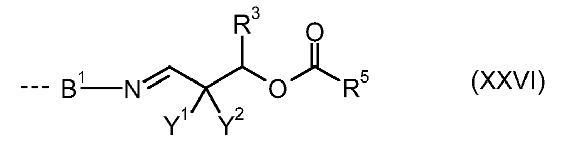
und A¹, B¹, Y¹, Y², R³, R⁵ und R⁸ die bereits genannten Bedeutungen aufweisen.
Bei diesen am meisten bevorzugten Verbindungen **VB1"** der Formel (XXV) handelt es sich um Verbindungen **VB1'** der Formel (V), welche ausgehend von Aldehyden **ALD2** der Formel (X b) hergestellt sind.

Beim beschriebenen Verfahren werden Polyurethanzusammensetzungen mit niedrigem Isocyanat-Monomergehalt erhalten.
Bei der Umsetztung von Polyolen mit Diisocyanaten zu Isocyanatgruppen aufweisenden Polyurethanpolymeren **PUP** verbleibt aufgrund der statistischen Verteilung der möglichen Reaktionsprodukte ein Restgehalt an nicht umgesetzten monomeren Diisocyanaten im gebildeten Polymer. Diese monomeren Diisocyanate, auch kurz "Isocyanat-Monomere" genannt, sind flüchtige Verbindungen und können aufgrund ihrer reizenden, allergenen und/oder toxischen Wirkung schädlich sein. In vielen Anwendungsgebieten sind sie deshalb unerwünscht. Dies gilt insbesondere für Spritzapplikationen sowie für heiss zu verarbeitende Zusammensetzungen, wie beispielsweise Heissschmelzklebstoffe.
Die unvollständige Umsetzung eines Polyurethanpolymers **PUP**, welches einen bestimmten Gehalt an monomerem Diisocyanat aufweist, mit einer Verbindung **VB** in der vorgängig beschriebenen Weise führt zu einer Polyurethanzusammensetzung, die einen überraschend niedrigen Gehalt an monomeren Diisocyanaten aufweist; dieser liegt deutlich tiefer als jener des Polyurethanpolymers **PUP** vor der Umsetzung.
Der überraschend niedrige Gehalt an monomeren Diisocyanaten wird vermutlich dadurch erreicht, dass bei der beschriebenen Umsetzung eines Isocyanatgruppen aufweisenden Polyurethanpolymers **PUP** mit mindestens einer Verbindung **VB**, wie sie vorgängig beschrieben wurde, die den aktiven Wasserstoff tragende Reaktivgruppe der Verbindung **VB** vorzugsweise mit den im Polyurethanpolymer **PUP** vorhandenen monomeren Diisocyanaten reagiert. Auf diese Weise wird ein grosser Teil der ursprünglich vorhandenen Diisocyanat-Monomere umgesetzt, auch wenn die Umsetzung mit einer solchen Stöchiometrie durchgeführt wird, dass ein Anteil des Polyurethanpolymers **PUP** nicht mit der Verbindung **VB** reagiert. Auf diese Weise kann der Gehalt an monomeren Diisocyanaten einer Polyurethanzusammensetzung stark reduziert werden.
Ein grosser Vorteil des beschriebenen Verfahrens ist, dass es äusserst effizient, kostengünstig und zudem den Vorteil auf weist, dass die zweifache Funktionalität der Monomere nicht verloren geht, so dass diese nutzbringend in den bei der Vernetzung der Polyurethanpolymere entstehenden hochmolekularen Kunststoff eingebaut werden.
Bevorzugt wird der Gehalt an monomeren Diisocyanaten in einer Polyurethanzusammensetzung auf einen Wert senkt, welcher höchstens 50% des Ausgangswerts entspricht.

Beim beschriebenen Verfahren kann das Polyurethanpolymer **PUP** bei der Umsetzung mit mindestens einer Verbindung **VB** gegebenenfalls weitere Substanzen in der Form von in Polyurethanzusammensetzungen üblicherweise eingesetzten Hilfs- und Zusatzstoffen enthalten.
Solche weiteren Hilfs- und Zusatzstoffe können aber auch erst nach der Durchführung des beschriebenen Verfahrens der erhaltenen Polyurethanzusammensetzung mit niedrigem Isocyanat-Monomergehalt zugegeben werden.

Mögliche Hilfs- und Zusatzstoffe sind beispielsweise
- Weichmacher, beispielsweise Carbonsäureester wie Phthalate, beispielsweise Dioctylphthalat, Diisononylphthalat oder Diisodecylphthalat, Adipate, beispielsweise Dioctyladipat, Azelate und Sebacate, organische Phosphor- und Sulfonsäureester oder Polybutene;
- nicht-reaktive thermoplastische Polymere, beispielsweise Homo- oder Copolymere von ungesättigten Monomeren, insbesondere aus der Gruppe umfassend Ethylen, Propylen, Butylen, Isobutylen, Isopren, Vinylacetat oder höhere Ester davon, und (Meth)acrylat, wobei Ethylenvinylacetat-Copolymere (EVA), ataktische Poly-α-Olefine (APAO), Polypropylene (PP) und Polyethylene (PE) besonders geeignet sind;
- Lösemittel;
- anorganische und organische Füllstoffe, zum Beispiel gemahlene oder gefällte Calciumcarbonate, welche gegebenenfalls mit Stearaten beschichtet sind, Russe, insbesondere industriell hergestellte Russe (im Folgenden als "Russ" bezeichnet), Baryt (BaS04, auch Schwerspat genannt), Kaoline, Aluminiumoxide, Aluminiumhydroxide, Kieselsäuren, insbesondere hochdisperse Kieselsäuren aus Pyrolyseprozessen, PVC-Pulver oder Hohlkugeln;
- Fasern, beispielsweise aus Polyethylen;
- Pigmente, beispielsweise Titandioxid oder Eisenoxide;
- Katalysatoren, welche die Hydrolyse der blockierten Aminogruppen beschleunigen, wie beispielsweise organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester;
- Katalysatoren, welche die Reaktion der Isocyanatgruppen beschleunigen, beispielsweise Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismuttris(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer, beispielsweise Verdickungsmittel oder Thixotropierungsmittel, zum Beispiel Harnstoffverbindungen, Polyamidwachse, Bentonite oder pyrogene Kieselsäuren;
- Reaktivverdünner und Vernetzer, beispielsweise Oligomere von Diisocyanaten wie MDI, TDI und IPDI, insbesondere in Form von Isocyanuraten, Carbodiimiden, Uretoniminen, Biureten, Allophanaten oder Iminooxadiazindionen, Addukte von Diisocyanaten wie MDI, TDI und IPDI mit kurzkettigen Polyolen, sowie Adipinsäuredihydrazid und andere Dihydrazide;
- latente Härter mit blockierten Aminogruppen, wie beispielsweise Ketimine, Oxazolidine, Enamine oder Aldimine;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane ("Silane") wie beispielsweise Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen.
   Es ist vorteilhaft, darauf zu achten, dass solche Zusätze die Lagerstabilität der Polyurethanzusammensetzung nicht beeinträchtigen. Das heisst, dass diese Zusätze während der Lagerung die zur Vernetzung führenden Reaktionen wie Hydrolyse der blockierten Aminogruppen oder Vernetzung der Isocyanatgruppen nicht in signifikantem Ausmass auslösen dürfen. Insbesondere bedeutet dies, dass all diese Zusätze kein oder höchstens Spuren von Wasser enthalten sollten. Es kann sinnvoll sein, gewisse Zusätze vor dem Einmischen chemisch oder physikalisch zu trocknen.

Aus dem beschriebenen Verfahren resultieren Polyurethanzusammensetzungen mit niedrigem Isocyanat-Monomergehalt. Bevorzugt weisen die aus dem beschriebenen Verfahren resultierenden Zusammensetzungen einen Gehalt an monomeren Diisocyanaten von ≤ 1 Gewichts-%, insbesondere von ≤ 0.5 Gewichts-%, bezogen auf die feuchtigkeitsreaktiven Bestandteile der Zusammensetzungen.
Diese Zusammensetzungen weisen sowohl Isocyanatgruppen als auch blockierte Aminogruppen auf. Bei Kontakt mit Feuchtigkeit, beziehungsweise Wasser, hydrolysieren die blockierten Aminogruppen und beginnen mit vorhandenen Isocyanatgruppen in der bereits beschriebenen Weise zu reagieren. Im Verhältnis zu den aus der Hydrolyse frei werdenden gegenüber Isocyanaten reaktiven Gruppen überschüssige Isocyanatgruppen reagieren direkt mit Wasser. Als Ergebnis dieser Reaktionen härtet die Zusammensetzung zu einem hochmolekularen Kunststoff aus; dieser Prozess wird auch als Vernetzung bezeichnet.
Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Besprühen, oder es kann der Zusammensetzung bei der Applikation eine Wasser enthaltende Komponente zugesetzt werden.
Die Applikation der Zusammensetzung kann in einem breiten Temperaturspektrum erfolgen. Beispielsweise kann die Zusammensetzung bei Raumtemperatur appliziert werden, wie es für einen elastischen Klebstoff oder einen Dichtstoff typisch ist. Die Zusammensetzung kann aber auch bei tieferen wie auch bei höheren Temperaturen appliziert werden. Letzteres ist insbesondere dann vorteilhaft, wenn die Zusammensetzung hochviskose oder schmelzbare Komponenten enthält, wie sie in Schmelzklebstoffen, beispielsweise Warmschmelzklebstoffen (Warm-Melt) oder Heissschmelzklebstoffen (Hot-Melt) typischerweise vorhanden sind. Die Applikationstemperaturen liegen für Warm-Melts beispielsweise im Bereich von 40 °C bis 80 °C, bei Hot-Melts zwischen 85 °C und 200 °C, insbesondere zwischen 100 °C und 150 °C.
Die Zusammensetzung vernetzt mit wenig Wasser rasch und ohne die Bildung von Blasen. Im ausgehärteten Zustand zeichnet sie sich über ausgezeichnete Eigenschaften aus. Sie verfügt beispielsweise über eine hohe Dehnbarkeit und eine hohe Zugfestigkeit. Ihr Elastizitätsmodul variiert in Abhängigkeit der zur Herstellung der Zusammensetzung verwendeten Komponenten, wie beispielsweise der Polyole, Polyisocyanate und der zur Herstellung der Verbindungen **VB** eingesetzten Amine. Somit lässt sie sich an die Anforderungen einer bestimmten Applikation anpassen, beispielsweise auf hohe Werte für Klebstoffe oder auf tiefe Werte für Dichtstoffe.

Die Polyurethanzusammensetzung mit niedrigem Isocyanat-Monomergehalt kann für verschiedenste Zwecke verwendet werden. Beispielsweise ist sie geeignet als Klebstoff für das Verkleben von diversen Substraten, beispielsweise zum Verkleben von Bauteilen bei der Herstellung von Automobilen, Schienenfahrzeugen, Schiffen oder anderen industriellen Gütern, insbesondere als reaktiver Heissschmelzklebstoff, als Dichtstoff aller Art, beispielsweise zum Abdichten von Fugen im Bau, sowie als Beschichtung oder Belag für diverse Artikel beziehungsweise variable Substrate. Als Beschichtungen bevorzugt sind Schutzanstriche, Versiegelungen und Schutzbeschichtungen, sowie insbesondere Primer.
Unter einem "Primer" wird im vorliegenden Dokument eine als Voranstrich geeignete Zusammensetzung verstanden, die neben nichtreaktiven flüchtigen Stoffen und optional festen Zuschlägen mindestens ein Polymer und/oder mindestens eine Substanz mit reaktiven Gruppen enthält und die befähigt ist, bei der Applikation auf einem Substrat zu einem festen, gut haftenden Film in einer Schichtdicke von typischerweise mindestens 10 µm auszuhärten, wobei die Aushärtung entweder allein durch das Verdampfen der nichtreaktiven flüchtigen Stoffe, wie beispielsweise Lösemittel oder Wasser, oder durch eine chemische Reaktion, oder durch eine Kombination dieser Faktoren, zustande kommt, und welche eine gute Haftung zu einer nachfolgend aufgebrachten Schicht, beispielsweise einem Kleb- oder Dichtstoff, aufbaut.

Unter den Belägen sind besonders Bodenbeläge als bevorzugt zu nennen. Solche Beläge werden hergestellt, indem die Zusammensetzung typischerweise auf den Untergrund gegossen und egalisiert wird, wo sie zu einem Bodenbelag aushärtet. Beispielsweise werden solche Bodenbeläge für Büros, Wohnbereiche, Spitäler, Schulen, Lagerhallen, Parkgaragen und andere private oder industrielle Anwendungen eingesetzt.
Besonders geeignet sind die Zusammensetzungen aber naturgemäss für Anwendungen, in welchen ein niedriger Gehalt an monomeren Diisocyanaten gefordert ist. Dies sind insbesondere Anwendungen, bei welchen die Zusammensetzung gespritzt wird, und Anwendungen, bei welchen die Zusammensetzung bei erhöhter Temperatur appliziert wird, beispielsweise als Heissschmelzklebstoff.

Die aus dem beschriebenen Verfahren erhältlichen Zusammensetzungen können in einem Verfahren zum Verkleben von einem Substrat **S1** mit einem Substrat **S2** eingesetzt werden, welches die Schritte umfasst:
i) Applikation einer der vorgängig beschriebenen Zusammensetzungen auf ein Substrat **S1;**
ii) Kontaktieren der applizierten Zusammensetzung mit einem Substrat **S2** innerhalb der Offenzeit der Zusammensetzung;
   oder
   i') Applikation einer der vorgängig beschriebenen Zusammensetzung auf ein Substrat **S1** und auf ein Substrat **S2;**
   ii') Kontaktieren der applizierten Zusammensetzung miteinander innerhalb der Offenzeit der Zusammensetzung;
wobei das Substrat **S2** aus dem gleichen oder einem unterschiedlichen Material wie das Substrat **S1** besteht.

Die aus dem beschriebenen Verfahren erhältlichen Zusammensetzungen können in einem Verfahren zum Abdichten zwischen einem Substrat **S1** und einem Substrat **S2** eingesetzt werden, welches den Schritt umfasst:
i") Applikation einer der vorgängig beschriebenen Zusammensetzungen zwischen ein Substrat **S1** und ein Substrat **S2,** so dass die Zusammensetzung mit dem Substrat **S1** und dem Substrat **S2** in Kontakt steht;
wobei das Substrat **S2** aus dem gleichen oder einem unterschiedlichen Material wie das Substrat **S1** besteht.

Die aus dem beschriebenen Verfahren erhältlichen Zusammensetzungen können in einem Verfahren zum Beschichten eines Substrates **S1** eingesetzt werden, umfassend den Schritt
i"') Applikation einer der vorgängig beschriebenen Zusammensetzungen auf ein Substrat **S1** innerhalb der Offenzeit der Zusammensetzung.

Handelt es sich bei der Zusammensetzung um einen sogenannten Warm-Melt, so wird die Zusammensetzung vor der Applikation auf eine Temperatur 40 °C bis 80 °C, insbesondere von 60 °C bis 80 °C, aufgeheizt und wird insbesondere bei dieser Temperatur in Schritt i) oder i') des oben beschriebenen Verfahrens zum Verkleben appliziert.
Handelt es sich bei der Zusammensetzung um einen sogenannten Hot-Melt, so wird die Zusammensetzung vor der Applikation auf eine Temperatur von 85 °C bis 200 °C, insbesondere von 100°C bis 180°C, bevorzugt von 120°C bis 160°C, aufgeheizt und wird insbesondere bei dieser Temperatur in Schritt i) oder i') des oben beschriebenen Verfahrens zum Verkleben appliziert.
Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Leder, Stoffe, Papier, Holz, mit Harz gebundene Holzwerkstoffe, Harz-Texil-Compositewerkstoffe, Kunststoffe wie Polyvinylchlorid (PVC), Acrylonitril-Butadien-StyrolCopolymere (ABS), SMC (Sheet Moulding Composites), Polycarbonat (PC), Polyamid (PA), Polyester, Polyoxymethylen (POM), Epoxidharze, Polyurethane (PUR), Polyolefine (PO), insbesondere mittels Plasma, Corona oder Flammen oberflächenbehandeltes Polyethylen (PE) und Polypropylen (PP), Ethylen/Propylen-Copolymere (EPM) und Ethylen/Propylen-Dien-Terpolymere (EPDM); sowie Farben und Lacke, insbesondere Automobillacke.

Aus diesen beschrieben Verfahren zum Verkleben, Abdichten bzw. Beschichten entsteht ein Artikel.
Dieser Artikel ist insbesondere ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels, oder ein Artikel der Möbel-, Textil- oder Verpackungsindustrie.

Besonders geeignet ist das beschriebene Verfahren zur Herstellung einer Heissschmelzklebstoff-Zusammensetzung mit niedrigem Isocyanat-Monomergehalt. Dazu wird
a) mindestens ein bei Raumtemperatur festes, Isocyanatgruppen aufweisendes Polyurethanpolymer **PUP1,** wie es vorgängig beschrieben wurde,
   mit
b) mindestens einer Verbindung **VB**, wie sie vorgängig beschrieben wurde,
   umgesetzt,
   mit der Massgabe, dass das Verhältnis zwischen den Isocyanatgruppen des Polyurethanpolymers **PUP1** und der Summe der blockierten Aminogruppen und der einen aktiven Wasserstoff tragenden Gruppe der Verbindung **VB** einen Wert von ≥ 1 aufweist.

Aus diesem Verfahren resultieren reaktive Heisschmelzklebstoffe mit einem überraschend niedrigen Isocyanat-Monomergehalt.

Für die Wirkungsweise eines reaktiven Heissschmelzklebstoffes ist es wichtig, dass der Klebstoff aufschmelzbar ist, das heisst, dass er bei der Applikationstemperatur eine genügend niedrige Viskosität aufweist, um applizierbar zu sein, und dass er beim Erkalten möglichst schnell eine genügende Klebefestigkeit aufbaut, schon bevor die Vernetzungsreaktion mit Luftfeuchtigkeit abgeschlossen ist (Anfangsfestigkeit). Es hat sich gezeigt, dass die aus dem beschriebenen Verfahren erhältlichen Heissschmelzklebstoffe mit einem niedrigen Isocyanat-Monomergehalt bei den für Heissschmelzklebstoffe üblichen Applikationstemperaturen im Bereich von 85 °C bis 200 °C, typischerweise 120 °C bis 160 °C, eine gut handhabbare Viskosität aufweisen, und dass sie beim Erkalten genügend schnell eine gute Klebefestigkeit aufbauen.
Bei der Applikation kommt ein solcher Heissschmelz-Klebstoff in Kontakt mit Feuchtigkeit, insbesondere in Form von Luftfeuchtigkeit. Parallel zur physikalischen Erhärtung infolge Erstarren beim Abkühlen setzt auch die chemische Vernetzung mit Feuchtigkeit ein, hauptsächlich indem die vorhandenen Aldiminogruppen durch Feuchtigkeit hydrolysiert werden und in der bereits beschriebenen Weise schnell mit vorhandenen Isocyanatgruppen reagieren. Überschüssige Isocyanatgruppen vernetzen ebenfalls mit Feuchtigkeit in bekannter Weise.
Ein aus dem beschriebenen Verfahren erhältlicher Heissschmelz-Klebstoff zeigt bei der Vernetzung mit Feuchtigkeit eine stark verminderte Tendenz zur Bildung von Blasen, da bei der Vernetzung durch das Vorhandensein von blockierten Aminogruppen -je nach Stöchiometrie - wenig oder gar kein Kohlendioxid gebildet wird.

### Beispiele

### Beschreibung der Messmethoden

**Infrarotspektren** wurden auf einem FT-IR Gerät 1600 von Perkin-Elmer (horizontale ATR-Messeinheit mit ZnSe-Kristall) gemessen, wobei die Substanzen unverdünnt als Film aufgetragen wurden. Die Absorptionsbanden sind in Wellenzahlen (cm⁻¹) angegeben (Messfenster: 4000-650 cm⁻¹).

**¹H-NMR-Spektren** wurden auf einem Spektrometer des Typs Bruker DPX-300 bei 300.13 MHz gemessen; die chemischen Verschiebungen δ sind angegeben in ppm relativ zu Tetramethylsilan (TMS), Kopplungskonstanten *J* sind angegeben in Hz. Echte und Pseudo-Kopplungsmuster wurden nicht unterschieden.
Die **Viskosität** wurde bei der angegebenen Temperatur auf einem thermostatisierten Kegel-Platten-Viskosimeter Physica UM (Kegeldurchmesser 20 mm, Kegelwinkel 1 °, Kegelspitze-Platten-Abstand 0.1 mm, Schergeschwindigkeit 10 bis 1000 s⁻¹) gemessen.
Der **Amingehalt** der hergestellten Dialdimine, das heisst der Gehalt an geschützten Aminogruppen in Form von Aldiminogruppen, wurde titrimetrisch bestimmt (mit 0.1N HClO₄ in Eisessig, gegen Kristallviolett) und ist stets angegeben in mmol N/g.
Der **Gehalt an monomeren Diisocyanaten** wurde bestimmt mittels HPLC (Detektion über Photodiodenarray; 0.04 M Natriumacetat / Acetonitril als mobile Phasen) und ist angegeben in Gewichts-% bezogen auf die gesamte Zusammensetzung.
Die **Zugfestigkeit**, die **Bruchdehnung** und das **E-Modul** wurden in Anlehnung an DIN 53504 bestimmt, an Hanteln mit einer Dicke von 1 mm und einer Länge von 75 mm (Steglänge 30 mm, Stegbreite 4 mm). Zur Herstellung der Hanteln wurde ein Klebstofffilm von 1 mm Dicke zubereitet (Applikationstemperatur des Klebstoffs 130 °C), aus welchem die Hanteln ausgestanzt und anschliessend während der angegebenen Zeit bei 23 °C und 50% relativer Luftfeuchtigkeit gelagert wurden.

### a) Herstellung von Verbindungen mit blockierter Aminogruppe und aktiven Wasserstoff tragenden Gruppe

### Verbindung VB-01

In einem Rundkolben mit Wasserabscheider und Rührer wurden 10.00 g 2-(2-Aminoethoxy)-ethanol (Diglycolamine^{®} Agent; Huntsman), 13.83 g Cyclohexanon und 100 ml Cyclohexan vorgelegt und die Mischung so lange unter Rückfluss erhitzt, bis sich die berechnete Menge Wasser abgeschieden hatte. Darauf wurde die flüchtigen Bestandteile der Reaktionsmischung im Vakuum entfernt (10 mbar, 100 °C). Ausbeute: 17.5 g einer blassgelben, klaren Flüssigkeit mit einem Amingehalt von 5.20 mmol N/g.
IR: 3360br und 3200br (O-H), 2926, 2854, 1658 (C=N), 1448, 1346, 1312, 1278, 1261, 1238, 1229sh, 1124, 1062, 1029sh, 972, 916, 892, 873, 858, 836, 806,772,744,660.

### Verbindung VB-02

In einem Rundkolben mit Wasserabscheider und Rührer wurden 15.00 g 3-Amino-1-propanol, 30.00 g 3,3-Dimethyl-2-butanon und 100 ml Cyclohexan vorgelegt und die Mischung so lange unter Rückfluss erhitzt, bis sich die berechnete Menge Wasser abgeschieden hatte. Darauf wurde die flüchtigen Bestandteile der Reaktionsmischung im Vakuum entfernt (10 mbar, 70 °C). Ausbeute: 29.8 g einer farblosen, klaren Flüssigkeit mit einem Amingehalt von 6.37 mmol N/g.
IR: 3350br (O-H), 2960, 2928, 2868, 1650 (C=N), 1474sh, 1464, 1432, 1390, 1362, 1285, 1220, 1202, 1146, 1058, 1028, 994, 946, 927, 914, 834, 808, 713.

### Verbindung VB-03

In einem Rundkolben mit Wasserabscheider und Rührer wurden 20.00 g N-(2-Hydroxyethyl)-piperazin, 15.83 g Cyclohexanon, 0.4 g Ameisensäure und 100 ml Cyclohexan vorgelegt und die Mischung so lange unter Rückfluss erhitzt, bis sich die berechnete Menge Wasser abgeschieden hatte. Darauf wurde die flüchtigen Bestandteile der Reaktionsmischung im Vakuum entfernt (10 mbar, 100 °C). Ausbeute: 31.3 g einer hellgelben, klaren Flüssigkeit mit einem Amingehalt von 9.37 mmol N/g.
IR: 3385br (O-H), 3056, 2922, 2881, 2855, 2812, 2765sh, 2695, 1644 (C=C), 1452, 1386, 1346, 1300, 1282, 1270, 1204, 1188sh, 1138, 1056, 1039sh, 1016sh, 1008, 976, 952, 930, 917, 894, 876, 836, 788, 688, 666.

### Verbindung VB-04

In einem Rundkolben mit Wasserabscheider und Rührer wurden unter Stickstoffatmosphäre 20.00 g Diethanolamin, 15.10 g Isobutyraldehyd und 100 ml Cyclohexan vorgelegt und die Mischung so lange unter Rückfluss erhitzt, bis sich die berechnete Menge Wasser abgeschieden hatte. Darauf wurde die flüchtigen Bestandteile der Reaktionsmischung im Vakuum entfernt (10 mbar, 70 °C). Ausbeute: 30.8 g einer farblosen, klaren Flüssigkeit mit einem Amingehalt von 6.33 mmol N/g.
IR: 3420br (O-H), 2956, 2931sh, 2872, 2810, 2706, 1731, 1470, 1390, 1360, 1327, 1292, 1221, 1194, 1164, 1142, 1118, 1056, 954, 934, 897sh, 880, 847, 812,678.

### Verbindung VB-05

In einem Rundkolben mit Wasserabscheider und Rührer wurden unter Stickstoffatmosphäre 5.00 g 2-(2-Aminoethoxy)-ethanol (Diglycolamine® Agent; Huntsman), 5.00 g Pivalaldehyd und 100 ml Cyclohexan vorgelegt und die Mischung so lange unter Rückfluss erhitzt, bis sich die berechnete Menge Wasser abgeschieden hatte. Darauf wurde die flüchtigen Bestandteile der Reaktionsmischung im Vakuum entfernt (10 mbar, 70 °C). Ausbeute: 7.9 g einer farblosen, klaren Flüssigkeit mit einem Amingehalt von 5.93 mmol N/g und einer Viskosität von 10 mPa·s bei 20 °C.
IR: 3375br (O-H), 2956, 2933, 2927, 2902, 2864, 2710br, 1666 (C=N), 1476, 1458, 1396, 1362, 1340sh, 1278, 1230sh, 1212, 1126, 1060, 958sh, 942, 920, 894,812,776.

### Verbindung VB-06

In einem Rundkolben wurden unter Stickstoffatmosphäre 10.00 g 2-(2-Aminoethoxy)-ethanol (Diglycolamine^{®} Agent; Huntsman) vorgelegt. Unter kräftigem Rühren wurden aus einem Eintropftrichter 10.34 g Benzaldehyd langsam zugegeben, wobei sich die Mischung erwärmte. Danach wurden die flüchtigen Bestandteile im Vakuum entfernt (10 mbar, 70 °C). Ausbeute: 18.5 g einer gelben, klaren Flüssigkeit mit einem Amingehalt von 5.07 mmol N/g und einer Viskosität von 75 mPa·s bei 20 °C.
IR: 3380br (O-H), 3084, 3061, 3029, 2934sh, 2909sh, 2858, 1959br, 1897br, 1823br, 1700, 1644 (C=N), 1600, 1580, 1492, 1450, 1378, 1342, 1312, 1294, 1220, 1170, 1122, 1062, 1027, 1002sh, 968, 931, 892, 853, 810, 754, 692.

### Verbindung VB-07

In einem Rundkolben wurden unter Stickstoffatmosphäre 16.74 g 3-Acetoxy-2,2-dimethyl-propanal vorgelegt. Unter kräftigem Rühren wurden aus einem Eintropftrichter 12.00 g 2-(2-Aminoethoxy)-ethanol (Diglycolamine^{®} Agent; Huntsman) langsam zugegeben, wobei sich die Mischung erwärmte. Danach wurden die flüchtigen Bestandteile im Vakuum entfernt (10 mbar, 100 °C). Ausbeute: 26.5 g einer farblosen, klaren Flüssigkeit mit einem Amingehalt von 4.25 mmol N/g und einer Viskosität von 10 mPa·s bei 20 °C.
IR: 3415br (O-H), 2962, 2928, 2914, 2902, 2888sh, 2866, 2849sh, 2722br, 1736 (C=O), 1666 (C=N), 1470, 1458sh, 1439sh, 1395, 1374, 1234, 1126, 1038, 1009, 988, 931, 894, 847, 814, 793sh.
¹H-NMR (CDCl₃, 300 K): δ 7.59 (t, 1 H, *J* ≈ 1.3, CH=N), 4.03 (s, 2 H, CH₂O), 3.71 (*m*, 4 H, HOCH₂C*H*₂OC*H*₂CH₂N), 3.58 (*m*, 4 H, HOC*H*₂CH₂OC*H*₂C*H*₂N), 3.06 (*s*, 1 H, OH), 2.06 (*s*, 3 H, CH₃CO), 1.11 (*s*, 6 H, C(CH₃)₂).

### Verbindung VB-08

In einem Rundkolben wurden unter Stickstoffatmosphäre 14.39 g 3-Acetoxy-2,2-dimethyl-propanal vorgelegt. Unter kräftigem Rühren wurden portionsweise 10.00 g festes 5-Amino-1-pentanol zugegeben, wobei letzteres in Lösung ging und sich die Mischung erwärmte. Danach wurden die flüchtigen Bestandteile im Vakuum entfernt (10 mbar, 100 °C). Ausbeute: 22.4 g einer farblosen, klaren Flüssigkeit mit einem Amingehalt von 4.28 mmol N/g und einer Viskosität von 50 mPa·s bei 20 °C.
IR: 3380br (O-H), 2932, 2860, 2723br, 1738 (C=O), 1666 (C=N), 1470, 1458, 1437sh, 1395, 1374, 1238, 1069sh, 1038, 1012sh, 988, 928, 891, 846, 775, 734.
¹H-NMR (CDCl₃, 300 K): δ 7.52 (t, 1 H, *J* ≈ 1.2, CH=N), 4.02 (*s*, 2 H, CH₂O), 3.63 (*t*, 2 H, *J* ≈ 6.5, HOC*H*₂CH₂CH₂), 3.39 (*t*×*d*, 2 H, *J* ≈ 6.9 / 1.2, CH=NC*H*₂CH₂), 2.11 (*s*, 1 H, OH), 2.05 (*s*, 3 H, CH₃CO), 1.60 (*m*, 4 H, HOCH₂C*H*₂CH₂ und CH=NCH₂C*H*₂), 1.36 (*m*, 2 H, HOCH₂CH₂C*H*₂), 1.11 (*s*, 6 H, C(CH₃)₂).

### Verbindung VB-09

In einem Rundkolben wurden unter Stickstoffatmosphäre 15.94 g 3-Acetoxy-2,2-dimethyl-propanal vorgelegt. Unter kräftigem Rühren wurden portionsweise 12.00 g bei 60 °C verflüssigtes Bis-hexamethylentriamin (BHMT-HP; Invista) zupipettiert, wobei sich die Mischung erwärmte. Danach wurden die flüchtigen Bestandteile im Vakuum entfernt (10 mbar, 100 °C). Ausbeute: 26.1 g einer farblosen, klaren Flüssigkeit mit einem Amingehalt von 6.24 mmol N/g und einer Viskosität von 60 mPa·s bei 20 °C.
IR: 3313 (N-H), 2963sh, 2928, 2852, 2826, 1738 (C=O), 1668 (C=N), 1468, 1437sh, 1394, 1374, 1339sh, 1234, 1128, 1038, 1011sh, 986, 928, 844, 730, 668.
¹H-NMR (CDCl₃, 300 K): δ 7.51 (*t,* 2 H, *J* ≈ 1.2, CH=N), 4.02 (*s*, 4 H, CH₂O), 3.36 (*t*×*d*, 4 H, *J* ≈ 6.9/1.2, CH=NC*H*₂CH₂), 2.58 (*t,* 4 H, *J* ≈ 7.2, NHC*H*₂CH₂CH₂), 2.04 (*s*, 6 H, CH₃CO), 1.63-1.43 (*m,* 9 H, CH=NCH₂C*H*₂CH₂ und N*H*CH₂CH₂CH₂), 1.30 (*m,* 8 H, CH=NCH₂CH₂C*H*₂ und NHCH₂CH₂C*H*₂), 1.10 (*s,* 12 H, C(CH₃)₂).

### b) Herstellung von Polyurethanpolymeren

### Polyurethanpolymer PUP-1

780 g Polyol Dynacoll^{®} 7360 (Degussa; kristallines Polyester-Diol, OH-Zahl 32 mg KOH/g, Säurezahl ca. 2 mg KOH/g) und 120 g 4,4'-Methylendiphenyldiisocyanat (MDI; Desmodur^{®} 44 MC L, Bayer) wurden nach bekanntem Verfahren bei 80 °C zu einem NCO-terminierten Polyurethanpolymeren umgesetzt. Das bei Raumtemperatur feste Reaktionsprodukt hatte einen titrimetrisch bestimmten Gehalt an freien Isocyanatgruppen von 1.97 Gewichts-%.

### Polyurethanpolymer PUP-2

435 g Polyol Dynacoll^{®} 7360 (Degussa; kristallines Polyester-Diol, OH-Zahl 32 mg KOH/g, Säurezahl ca. 2 mg KOH/g) und 65 g Isophorondiisocyanat (IPDI; Vestanat^{®} IPDI, Degussa) wurden nach bekanntem Verfahren bei 80 °C zu einem NCO-terminierten Polyurethanpolymeren umgesetzt. Das bei Raumtemperatur feste Reaktionsprodukt hatte einen titrimetrisch bestimmten Gehalt an freien Isocyanatgruppen von 2.25 Gewichts-%.

### c) Herstellung von Heissschmelzklebstoffen

### Beispiele 1 bis 6 und Vergleichsbeispiel 7

Für jedes Beispiel wurden die jeweiligen Bestandteile gemäss Tabelle 1 auf 100 °C erwärmt und unter Stickstoffatmosphäre in den angegebenen Gewichtsteilen in einen Polypropylenbecher mit Schraubverschluss eingewogen und mittels eines Zentrifugalmischers (SpeedMixer^{™} DAC 150, FlackTek Inc.; 1 min. bei 3000 U/min) gemischt. Die so erhaltene dünnflüssige Mischung wurde unmittelbar danach in eine innenlackierte Aluminiumtube abgefüllt, diese luftdicht verschlossen und während 1 Stunde bei 100 °C gelagert.

**Tabelle 1: Zusammensetzung der Heissschmelzklebstoffe der Beispiele 1 bis 6 und des Vergleichsbeispiels 7.**

| Beispiel | **1** | **2** | **3** | **4** | **5** | **6** | **7 (Vgl.)** |
|---|---|---|---|---|---|---|---|
| PUR-Polymer ***PUP-1*** | 50.0 | 50.0 | 50.0 | 50.0 | 50.0 | 50.0 | 50.0 |
| Verbindung | ***VB-04*** 1.11 | ***VB-05*** 1.78 | ***VB-06*** 2.08 | ***VB-07*** 2.49 | ***VB-08*** 2.47 | ***VB-09*** 3.38 | *-* |

In den Beispielen 1 bis 6 beträgt das Verhältnis zwischen den Isocyanatgruppen des Polyurethanpolymers ***PUP-1*** und der Summe der gegenüber Isocyanatgruppen reaktiven Gruppen (freie und blockierte Hydroxylgruppen, freie und blockierte Aminogruppen) der Verbindungen ***VB-04*** bis ***VB-09*** 1.0 / 0.9.

Die so hergestellten Heissschmelzklebstoffe der Beispiele 1 bis 6 und des Vergleichsbeispiels 7 wurden auf Viskosität und Gehalt an monomerem 4,4'-Methylendiphenyldiisocyanat (4,4'-MDI) geprüft. Die Zugfestigkeit, Bruchdehnung und das E-Modul wurde am während 7 Tagen gelagerten Klebstofffilm gemessen. Die Ergebnisse sind in der Tabelle 2 dargestellt.

**Tabelle 2: Eigenschaften der Heissschmelzklebstoffe der Beispiele 1 bis 6 und des Vergleichsbeispiels 7.**

| Beispiel | **1** | **2** | **3** | **4** | **5** | **6** | **7 (Vgl.)** |
|---|---|---|---|---|---|---|---|
| Gehalt an monomerem Gehalt an monomerem 4,4'-MDI [Gewichts-%] | 0.37 | 0.09 | 0.11 | 0.21 | 0.34 | 0.43 | 1.59 |
| Viskosität bei 130 °C [Pa·s] | 21.2 | 15.8 | 14.6 | 6.2 | 6.4 | 9.0 | 7.0 |
| Zugfestigkeit [MPa] | 28.4 | 20.3 | 20.0 | 18.1 | 21.1 | 26.0 | 18.7 |
| Bruchdehnung [%] | 540 | 730 | 670 | 730 | 650 | 360 | 510 |
| E-Modul bei 0.5-5.0% [MPa] | 290 | 225 | 220 | 195 | 235 | 220 | 315 |

Aus der Tabelle 2 ist ersichtlich, dass die mittels des erfindungsgemässen Verfahrens hergestellten Heissschmelzklebstoffe der Beispiele 1 bis 6 eine gut handhabbare Viskosität aufweisen und innerhalb von 7 Tagen zu einem gut vernetzen Kunststoff aushärten, der eine hohe Zugfestigkeit, eine hohe Bruchdehnung und ein hohes E-Modul aufweist. Gegenüber dem Heissschmelzklebstoff des Vergleichsbeispiels 7 weisen sie einen deutlich niedrigeren Gehalt an monomerem 4,4'-MDI auf, wobei dieser Gehalt durch das erfindungsgemässe Verfahren auf Werte zwischen 6% und 27% des Ausgangswerts gesenkt wird.

### Beispiele 8 bis 13 und Vergleichsbeispiel 14

Für jedes Beispiel wurden die jeweiligen Bestandteile gemäss Tabelle 3 auf 100 °C erwärmt und unter Stickstoffatmosphäre in den angegebenen Gewichtsteilen in einen Polypropylenbecher mit Schraubverschluss eingewogen und mittels eines Zentrifugalmischers (SpeedMixer^{™} DAC 150, FlackTek Inc.; 1 min. bei 3000 U/min) gemischt. Die so erhaltene dünnflüssige Mischung wurde unmittelbar danach in eine innenlackierte Aluminiumtube abgefüllt, diese luftdicht verschlossen und während 1 Stunde bei 100 °C gelagert.

**Tabelle 3: Zusammensetzung der Heissschmelzklebstoffe der Beispiele 8 bis 13 und des Vergleichsbeispiels 14.**

| Beispiel | **8** | **9** | **10** | **11** | **12** | **13** | **14 (Vgl.)** |
|---|---|---|---|---|---|---|---|
| PUR-Polymer ***PUP-2*** | 50.0 | 50.0 | 50.0 | 50.0 | 50.0 | 50.0 | 50.0 |
| Verbindung | ***VB-01*** 2.32 | ***VB-02*** 1.90 | ***VB-03*** 2.57 | ***VB-04*** 1.27 | ***VB-05*** 2.03 | ***VB-07*** 2.84 | - |

In den Beispielen 8 bis 13 beträgt das Verhältnis zwischen den Isocyanatgruppen des Polyurethanpolymers ***PUP-2*** und der Summe der gegenüber Isocyanatgruppen reaktiven Gruppen (freie und blockierte Hydroxylgruppen, freie und blockierte Aminogruppen) der Verbindungen ***VB-01*** bis ***VB-05,*** bzw. ***VB-07**,* 1.0 / 0.9.

Die so hergestellten Heissschmelzklebstoffe der Beispiele 8 bis 13 und des Vergleichsbeispiels 14 wurden auf Viskosität und Gehalt an monomerem Isophorondiisocyanat (IPDI; Summe aus *cis-* und *trans*-Isomeren) geprüft. Die Zugfestigkeit, Bruchdehnung und das E-Modul wurde am während 3 Wochen gelagerten Klebstofffilm gemessen. Die Ergebnisse sind in der Tabelle 4 dargestellt.

**Tabelle 4: Eigenschaften der Heissschmelzklebstoffe der Beispiele 8 bis 13 und des Vergleichsbeispiels 14.**

| Beispiel | **8** | **9** | **10** | **11** | **12** | **13** | **14 (Vgl.)** |
|---|---|---|---|---|---|---|---|
| Gehalt an monomerem IPDI [Gewichts-%] | 0.04 | 0.22 | 0.02 | 0.65 | 0.10 | 0.21 | 2.32 |
| Viskosität bei 130 °C [Pa.s] | 12.0 | 5.8 | 20.2 | 3.4 | 3.3 | 2.4 | 2.1 |
| Zugfestigkeit [MPa] | 19.7 | 19.3 | 12.4 | 25.3 | 20.3 | 17.7 | 18.2 |
| Bruchdehnung [%] | 700 | 620 | 12 | 420 | 800 | 800 | 9 |
| E-Modul bei 0.5-5.0% [MPa] | 195 | 230 | 205 | 290 | 230 | 200 | 305 |

Aus der Tabelle 4 ist ersichtlich, dass die mittels des erfindungsgemässen Verfahrens hergestellten Heissschmelzklebstoffe der Beispiele 8 bis 13 eine gut handhabbare Viskosität aufweisen und innerhalb von 3 Wochen zu einem gut vernetzen Kunststoff aushärten, der eine hohe Zugfestigkeit, eine hohe Bruchdehnung und ein hohes E-Modul aufweist. Gegenüber dem Heissschmelzklebstoff des Vergleichsbeispiels 14 weisen sie einen deutlich niedrigeren Gehalt an monomerem IPDI auf, wobei dieser Gehalt durch das erfindungsgemässe Verfahren auf Werte zwischen 1% und 28% des Ausgangswerts gesenkt wird. Der Heissschmelzklebstoff des Vergleichsbeispiels 14 ist nach 3 Wochen noch nicht vollständig vernetzt und weist deshalb eine ungenügende Bruchdehnung auf.

## Patentansprüche

1. Verfahren zur Herstellung einer Polyurethanzusammensetzung mit niedrigem Gehalt an monomeren Diisocyanaten, **dadurch gekennzeichnet, dass**
a)mindestens ein Isocyanatgruppen aufweisendes Polyurethanpolymer **PUP** mit
b)mindestens einer einen aktiven Wasserstoff tragenden Verbindung **VB** umgesetzt wird;
mit der Massgabe, dass das Verhältnis zwischen den Isocyanatgruppen des Polyurethanpolymers **PUP** und der Summe der blockierten Aminogruppen und der einen aktiven Wasserstoff tragenden Gruppe der Verbindung **VB** einen Wert von ≥ 1 aufweist;
wobei die Verbindung **VB** sowohl
i) eine einen aktiven Wasserstoff tragende Gruppe, welche eine Hydroxylgruppe oder eine Mercaptogruppe oder eine sekundäre Aminogruppe darstellt, aufweist,
als auch
ii) mindestens eine blockierte Aminogruppe aufweist, welche ausgewählt ist aus der Gruppe bestehend aus Aldiminogruppen der Formel (I a) oder (I b), Ketiminogruppen, Enaminogruppen und Oxazolidinogruppen, 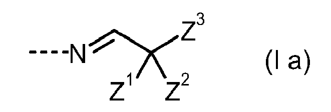 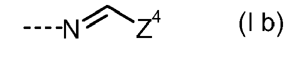
wobei in Formel (I a)
Z¹ und Z² entweder
unabhängig voneinander jeweils für ein Wasserstoffatom oder für einen einwertigen Kohlenwasserstoffrest mit 1 bis 12 C-Atomen stehen,
oder
zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen; und
Z³ entweder
für ein Wasserstoffatom steht,
oder für eine verzweigte oder unverzweigte Alkyl-, Cycloalkyl-, Alkylen- oder Cycloalkylengruppe steht,
oder für eine substituierte oder unsubstituierte Aryl- oder Arylalkylgruppe steht,
oder für einen Rest der Formel O-R² oder 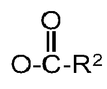 oder 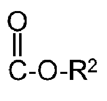 oder 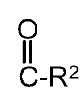 steht, wobei R²
für eine Aryl-, Arylalkyl- oder Alkylgruppe steht und jeweils substituiert oder unsubstituiert ist,
oder für einen Rest der Formel (II) steht, 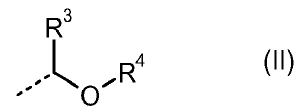 wobei in Formel (II)
R³ für ein Wasserstoffatom oder für eine Alkyl- oder Arylalkylgruppe, bevorzugt für ein Wasserstoffatom, steht, und
R⁴ entweder
für einen Kohlenwasserstoffrest mit 1 bis 30 C-Atomen, der gegebenenfalls Ethersauerstoffatome enthält, steht,
oder für einen Rest 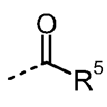 steht, wobei R⁵ für ein Wasserstoffatom oder für einen Kohlenwasserstoffrest mit 1 bis 5 C-Atomen steht
und wobei in Formel (I b)
Z⁴ entweder
für eine substituierte oder unsubstituierte Aryl- oder Heteroaryl-Gruppe, welche eine Ringgrösse von 5 bis 8, bevorzugt 6, Atomen aufweist, steht,
oder für 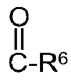 steht, wobei R⁶ für ein Wasserstoffatom oder für eine Alkoxygruppe steht,
oder für eine substituierte oder unsubstituierte Alkenyl- oder Arylalkenylgruppe mit mindestens 6 C-Atomen steht.

2. Verfahren gemäss Anspruch 1, **dadurch gekennzeichnet, dass** das Isocyanatgruppen aufweisende Polyurethanpolymer **PUP** ein bei Raumtemperatur festes Polyurethanpolymer **PUP1** ist, und bevorzugt ein Molekulargewicht von 1'000 bis 10'000 g/mol, insbesondere von 2'000 bis 5'000 g/mol, aufweist.

3. Verfahren gemäss Anspruch 1 oder 2, **dadurch gekennzeichnet, dass** die einen aktiven Wasserstoff tragende Verbindung **VB** eine Aldiminogruppen aufweisende Verbindung **VB1** der Formel (III a) oder (III b) ist, 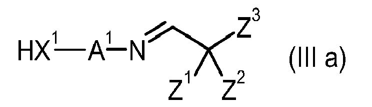 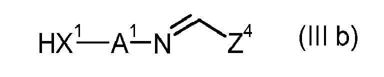 wobei
A¹ entweder
für einen zweiwertigen, gegebenenfalls Heteroatome aufweisenden, Kohlenwasserstoffrest mit 2 bis 20 C-Atomen steht,
oder zusammen mit R⁸ für einen dreiwertigen Kohlenwasserstoffrest mit 3 bis 20 C-Atomen, welcher gegebenenfalls mindestens ein Heteroatom, insbesondere in der Form von Ether-Sauerstoff oder tertiärem Amin-Stickstoff, enthält, steht;
X¹ für O oder S oder N-R⁷ oder N-R⁸ steht,
wobei R⁷
entweder für einen einwertigen Kohlenwasserstoffrest mit 1 bis 20 C-Atomen, welcher gegebenenfalls mindestens eine Carbonsäure-ester-, Nitril-, Nitro-, Phosphonsäureester-, Sulfon- oder Sulfonsäure-ester-Gruppe aufweist, steht,
oder für einen Substituenten der Formel (IV a) oder (IV b) steht, 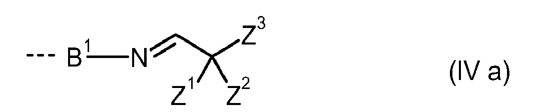 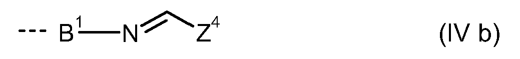 wobei B¹ für einen zweiwertigen, gegebenenfalls Heteroatome aufweisenden, Kohlenwasserstoffrest mit 2 bis 20 C-Atomen steht, und
R⁸ zusammen mit A¹ für einen dreiwertigen Kohlenwasserstoffrest mit 3 bis 20 C-Atomen, welcher gegebenenfalls mindestens ein Heteroatom, insbesondere in Form von Ether-Sauerstoff oder tertiärem Amin-Stickstoff, enthält, steht.

4. Verfahren gemäss Anspruch 3, **dadurch gekennzeichnet, dass** die einen aktiven Wasserstoff tragende Verbindung **VB** eine Aldiminogruppen aufweisende Verbindung **VB1'** der Formel (V) ist, 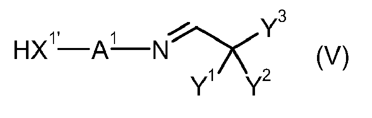 wobei
Y¹ und Y² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
Y³ entweder
für eine verzweigte oder unverzweigte Alkyl-, Cycloalkyl-, Alkylen-oder Cycloalkylengruppe steht,
oder für eine substituierte oder unsubstituierte Aryl- oder Arylalkyl-gruppe steht,
oder für einen Rest der Formel O-R² oder 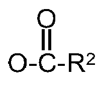 oder 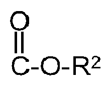 oder 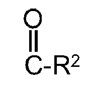 steht,
oder für einen Rest der Formel (II) steht, 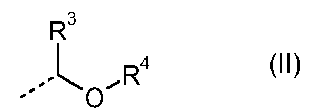 X^{1'} für O oder S oder N-R^{7'} oder N-R⁸ steht,
wobei R^{7'}
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (VI) steht

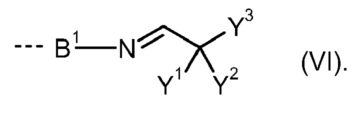

5. Verfahren gemäss Anspruch 4, **dadurch gekennzeichnet, dass** die einen aktiven Wasserstoff tragende Verbindung **VB** eine Aldiminogruppen aufweisende Verbindung **VB1"** der Formel (XXV) ist, 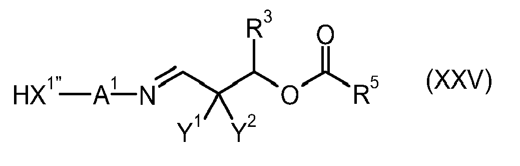 wobei
X^{1"} für O oder S oder N-R^{7"} oder N-R⁸ steht,
wobei R^{7"}
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (XXVI) steht.

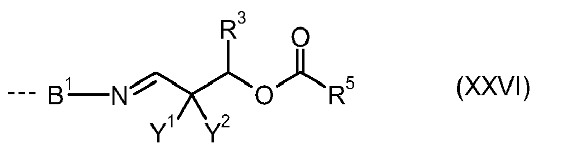

6. Verfahren gemäss Anspruch 3 oder 4 oder 5, **dadurch gekennzeichnet, dass** die Verbindung **VB1** der Formel (III a) oder (III b) erhalten wird aus der Umsetzung von mindestens einem Amin **B1** der Formel (VII) mit mindestens einem Aldehyd **ALD** der Formel (VIII a) oder (VIII b),
HX^{1a}-A¹-NH₂ (VII) 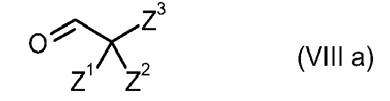 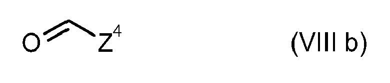
wobei
X^{1a} für O oder S oder N-R⁹ oder N-R⁸ steht,
wobei R⁹
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (VII a) steht,
--- B¹-NH₂ (VII a)
und wobei der Aldehyd **ALD** in Bezug auf die primären Aminogruppen des Amins **B1** stöchiometrisch oder in stöchiometrischem Überschuss eingesetzt wird.

7. Verfahren gemäss Anspruch 6, **dadurch gekennzeichnet, dass** der Aldehyd **ALD** nicht enolisierbar ist, und insbesondere in α-Stellung zur Carbonylgruppe kein Wasserstoffatom aufweist.

8. Verfahren gemäss Anspruch 6 oder 7, **dadurch gekennzeichnet, dass** der Aldehyd **ALD** ein Aldehyd der Formel (VIII b) oder der Formel (IX) ist.

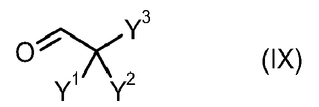

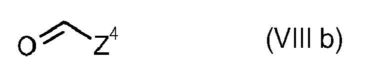

9. Verfahren gemäss einem der Ansprüche 6 bis 8, **dadurch gekennzeichnet, dass** der Aldehyd **ALD** ein Aldehyd **ALD1** der Formel (X a) ist 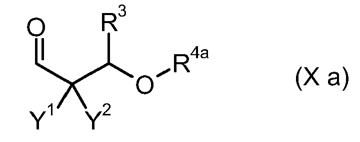 wobei R^{4a} für einen Kohlenwasserstoffrest mit 1 bis 30 C-Atomen, insbesondere 11 bis 30 C-Atomen, der gegebenenfalls Ethersauerstoffatome enthält, steht;
und der Aldehyd **ALD1** bevorzugt ausgewählt ist aus der Gruppe bestehend aus 2,2-Dimethyl-3-phenoxy-propanal, 3-Cyclohexyloxy-2,2-dimethyl-propanal, 2,2-Dimethyl-3-(2-ethylhexyloxy)-propanal, 2,2-Dimethyl-3-lauroxy-propanal und 2,2-Dimethyl-3-stearoxy-propanal.

10. Verfahren gemäss einem der Ansprüche 6 bis 8, **dadurch gekennzeichnet, dass** der Aldehyd **ALD** ein Aldehyd **ALD2** der Formel (X b) ist 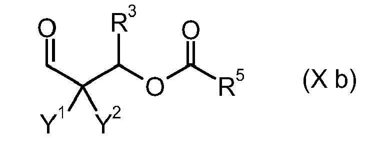 wobei R⁵ für ein Wasserstoffatom oder für einen Kohlenwasserstoffrest mit 1 bis 5 C-Atomen steht;
und der Aldehyd **ALD2** bevorzugt ausgewählt ist aus der Gruppe bestehend aus 2,2-Dimethyl-3-formyloxy-propanal, 3-Acetoxy-2,2-dimethylpropanal, 2,2-Dimethyl-3-propionoxypropanal, 3-Butyroxy-2,2-dimethyl-propanal, 2,2-Dimethyl-3-isobutyroxy-propanal, 2,2-Dimethyl-3-pentoyloxy-propanal und 2,2-Dimethyl-3-hexoyloxy-propanal.

11. Verfahren gemäss einem der Ansprüche 6 bis 8, **dadurch gekennzeichnet, dass** der Aldehyd **ALD** ausgewählt ist aus der Gruppe bestehend aus Benzaldehyd, 2- und 3- und 4-Tolualdehyd, 4-Ethyl- und 4-Propyl- und 4-Isopropyl- und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7- und 8-Stellungsisomere, sowie Anthracen-9-carbaldehyd; sowie Glyoxal, Glyoxalsäureester, wie zum Beispiel Glyoxalsäuremethylester, Zimtaldehyd und substituierte Zimtaldehyde.

12. Verfahren gemäss Anspruch 1 oder 2, **dadurch gekennzeichnet, dass** die einen aktiven Wasserstoff tragende Verbindung **VB** eine Ketiminogruppen aufweisende Verbindungen **VB2** der Formel (XI) ist 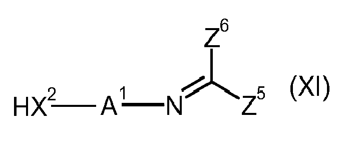 wobei
A¹ entweder
für einen zweiwertigen, gegebenenfalls Heteroatome aufweisenden, Kohlenwasserstoffrest mit 2 bis 20 C-Atomen steht,
oder zusammen mit R⁸ für einen dreiwertigen Kohlenwasserstoffrest mit 3 bis 20 C-Atomen, welcher gegebenenfalls mindestens ein Heteroatom, insbesondere in der Form von Ether-Sauerstoff oder tertiärem Amin-Stickstoff, enthält, steht;
X² für O oder S oder N-R¹⁰ oder N-R⁸ steht,
wobei R¹⁰
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (XII) steht; 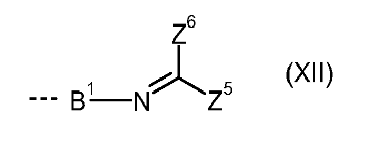 wobei B¹ für einen zweiwertigen, gegebenenfalls Heteroatome aufweisenden, Kohlenwasserstoffrest mit 2 bis 20 C-Atomen steht, und
R⁸ zusammen mit A¹ für einen dreiwertigen Kohlenwasserstoffrest mit 3 bis 20 C-Atomen, welcher gegebenenfalls mindestens ein Heteroatom, insbesondere in Form von Ether-Sauerstoff oder tertiärem Amin-Stickstoff, enthält, steht; und
Z⁵ und Z⁶ entweder
unabhängig voneinander jeweils für einen einwertigen Kohlenwasserstoffrest mit 1 bis 12 C-Atomen stehen,
oder
zusammen für einen zweiwertigen Kohlenwasserstoffrest mit 4 bis 20 C-Atomen stehen, der Teil eines, gegebenenfalls substituierten, carbocyclischen Rings mit 5 bis 8, bevorzugt 6, C-Atomen ist.

13. Verfahren gemäss Anspruch 12, **dadurch gekennzeichnet, dass** Z⁵ und Z⁶ entweder unabhängig voneinander jeweils für einen unverzweigten oder insbesondere verzweigten Alkylrest mit 1 bis 6 C-Atomen stehen,
oder zusammen für einen Alkylrest mit 4 bis 10 C-Atomen, der Teil eines, gegebenenfalls substituierten, carbocyclischen Rings mit 5 bis 6, insbesondere 6, C-Atomen ist, stehen
und/oder X² bevorzugt für O oder N-R¹⁰ oder N-R⁸ steht.

14. Verfahren gemäss Anspruch 1 oder 2, **dadurch gekennzeichnet, dass** die einen aktiven Wasserstoff tragende Verbindung **VB** eine Enaminogruppen aufweisende Verbindungen **VB3** der Formel (XIV) ist 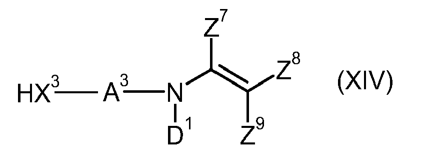 wobei
A³ entweder
für einen zweiwertigen, gegebenenfalls Heteroatome aufweisenden, Kohlenwasserstoffrest mit 2 bis 20 C-Atomen steht,
oder
zusammen mit D¹ oder zusammen mit R¹² für einen dreiwertigen Kohlenwasserstoffrest mit 3 bis 20 C-Atomen, welcher gegebenenfalls mindestens ein Heteroatom, insbesondere in der Form von Ether-Sauerstoff oder tertiärem Amin-Stickstoff, enthält, steht,
X³ für O oder S oder N-R¹¹ oder N-R¹² steht,
wobei R¹¹
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (XV) steht, 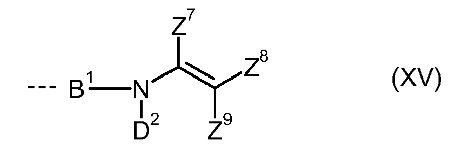 wobei B¹ für einen zweiwertigen, gegebenenfalls Heteroatome aufweisenden, Kohlenwasserstoffrest mit 2 bis 20 C-Atomen steht, und
D² für einen einwertigen Kohlenwasserstoffrest mit 1 bis 12 C-Atomen steht,
und R¹² entweder zusammen mit A³ oder zusammen mit D¹ für einen dreiwertigen Kohlenwasserstoffrest mit 3 bis 20 C-Atomen, welcher gegebenenfalls mindestens ein Heteroatom, insbesondere in der Form von Ether-Sauerstoff oder tertiärem Amin-Stickstoff, enthält, steht;
Z⁷ und Z⁸ entweder
unabhängig voneinander jeweils für ein Wasserstoffatom oder für einen einwertigen Kohlenwasserstoffrest mit 1 bis 12 C-Atomen stehen, oder
zusammen für einen zweiwertigen Kohlenwasserstoffrest mit 3 bis 20 C-Atomen, der Teil eines, gegebenenfalls substituierten, carbocyclischen Rings mit 5 bis 8, bevorzugt 6, C-Atomen ist, stehen;
Z⁹ für ein Wasserstoffatom oder für einen einwertigen Kohlenwasserstoffrest mit 1 bis 12 C-Atomen steht; und
D¹ entweder
für einen einwertigen Kohlenwasserstoffrest mit 1 bis 12 C-Atomen steht,
oder
zusammen mit R¹² oder zusammen mit A³ für einen dreiwertigen Kohlenwasserstoffrest mit 4 bis 20 C-Atomen, welcher gegebenenfalls mindestens ein Heteroatom, insbesondere in der Form von Ether-Sauerstoff oder tertiärem Amin-Stickstoff, enthält, steht.

15. Verfahren gemäss Anspruch 14, **dadurch gekennzeichnet, dass** Z⁷, Z⁸ und Z⁹ unabhängig voneinander jeweils entweder für ein Wasserstoffatom oder für einen Alkylrest mit 1 bis 4 C-Atomen stehen.

16. Verfahren gemäss Anspruch 1 oder 2, **dadurch gekennzeichnet, dass** das die einen aktiven Wasserstoff tragende Verbindung **VB** eine Oxazolidinogruppen aufweisende Verbindung **VB4** der Formel (XIX) ist 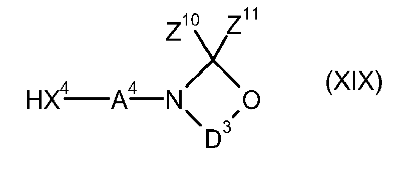 wobei
A⁴ für einen zweiwertigen, gegebenenfalls Heteroatome aufweisenden, Kohlenwasserstoffrest mit 2 bis 20 C-Atomen steht;
Z¹⁰ und Z¹¹ unabhängig voneinander jeweils für ein Wasserstoffatom oder für einen einwertigen Kohlenwasserstoffrest mit 1 bis 12 C-Atomen stehen,
D³ für einen, gegebenenfalls substituierten, Alkylenrest mit 2 oder 3 C-Atomen steht, und
X⁴ für O oder S oder N-R¹⁴ steht,
wobei R¹⁴
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht, oder für einen Substituenten der Formel (XX) steht, 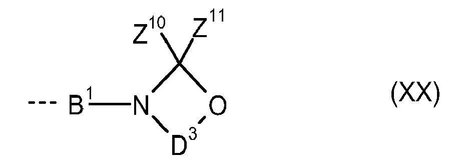 wobei B¹ für einen zweiwertigen, gegebenenfalls Heteroatome aufweisenden, Kohlenwasserstoffrest mit 2 bis 20 C-Atomen steht.

17. Verfahren gemäss Anspruch 16, **dadurch gekennzeichnet, dass**
Z¹⁰ für ein Wasserstoffatom und Z¹¹ für einen Alkylrest mit 1 bis 8 C-Atomen steht und/oder
A⁴ für einen gegebenenfalls substituierten Alkylenrest mit 2 oder 3 C-Atomen steht
und /oder X⁴ für O steht.

18. Verfahren gemäss einem der vorhergehenden Ansprüche, **dadurch gekennzeichnet, dass** es den Gehalt an monomeren Diisocyanaten in einer Polyurethanzusammensetzung auf einen Wert senkt, welcher höchstens 50% des Ausgangswerts entspricht.

19. Zusammensetzung mit einem Gehalt an monomeren Diisocyanaten von ≤ 1 Gewichts-%, insbesondere von ≤ 0.5 Gewichts-%, bezogen auf die feuchtigkeitsreaktiven Bestandteile der Zusammensetzung, **dadurch gekennzeichnet, dass** diese aus einem Verfahren zur Herstellung einer Polyurethanzusammensetzung mit niedrigem Isocyanat-Monomergehalt gemäss einem der Ansprüche 1 bis 18 erhältlich ist

20. Verfahren zum Verkleben von einem Substrat **S1** mit einem Substrat **S2,** umfassend die Schritte
i) Applikation einer Zusammensetzung gemäss Anspruch 19 auf ein Substrat **S1;**
ii) Kontaktieren der applizierten Zusammensetzung mit einem Substrat **S2** innerhalb der Offenzeit der Zusammensetzung;
oder
i') Applikation einer Zusammensetzung gemäss Anspruch 19 auf ein Substrat **S1** und auf ein Substrat **S2;**
ii') Kontaktieren der applizierten Zusammensetzung miteinander innerhalb der Offenzeit der Zusammensetzung;
wobei das Substrat **S2** aus dem gleichen oder einem unterschiedlichen Material wie das Substrat **S1** besteht.

21. Verfahren zum Abdichten, umfassend den Schritt
i") Applikation einer Zusammensetzung gemäss Anspruch 19 zwischen ein Substrat **S1** und ein Substrat **S2,** so dass die Zusammensetzung mit dem Substrat **S1** und dem Substrat **S2** in Kontakt steht;
wobei das Substrat **S2** aus dem gleichen oder einem unterschiedlichen Material wie das Substrat **S1** besteht.

22. Verfahren zum Beschichten eines Substrates **S1,** umfassend den Schritt
i''') Applikation einer Zusammensetzung gemäss Anspruch 19 auf ein Substrat **S1** innerhalb der Offenzeit der Zusammensetzung.

23. Verfahren gemäss Anspruch 20 oder 21 oder 22, **dadurch gekennzeichnet, dass** die Zusammensetzung vor der Applikation auf eine Temperatur von 40 °C bis 80 °C, insbesondere von 60 °C bis 80 °C, aufgeheizt wird und insbesondere bei dieser Temperatur in Schritt i) oder i') oder i") oder i"') appliziert wird.

24. Verfahren gemäss Anspruch 20 oder 21 oder 22, **dadurch gekennzeichnet, dass** die Zusammensetzung vor der Applikation auf eine Temperatur von 85 °C bis 200 °C, insbesondere von 100 °C bis 180 °C, bevorzugt von 120 °C bis 160 °C, aufgeheizt wird und insbesondere bei dieser Temperatur in Schritt i) oder i') oder i") oder i"') appliziert wird.

25. Artikel, welcher nach einem Verfahren gemäss einem der Ansprüche 20 bis 24 verklebt, abgedichtet oder beschichtet wurde.

26. Artikel gemäss Anspruch 25, **dadurch gekennzeichnet, dass** der Artikel ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels, oder ein Artikel der Möbel-, Textil- oder Verpackungsindustrie ist.
